# EUROPEAN PATENT SPECIFICATION

(11) **EP 3 817 357 B1**
(45) Date of publication and mention of the grant of the patent: **10.05.2023**
(21) Application number: 19833934.3
(22) Date of filing: 09.04.2019
(51) Int. Cl.: H04N 23/55, H04N 23/57

(54) **CAMERA MODULE, ASSEMBLY, ELECTRONIC DEVICE, MOBILE TERMINAL, AND PHOTOGRAPHY METHOD**
KAMERAMODUL, ANORDNUNG, ELEKTRONISCHE VORRICHTUNG, MOBILES ENDGERÄT UND FOTOGRAFIERVERFAHREN
MODULE DE CAMÉRA, ENSEMBLE, DISPOSITIF ÉLECTRONIQUE, TERMINAL MOBILE, ET PROCÉDÉ DE PHOTOGRAPHIE

(30) Priority: 09.07.2018 CN 201821082687 U; 09.07.2018 CN 201810744727
(43) Date of publication of application: 05.05.2021
(73) Proprietor: GUANGDONG OPPO MOBILE TELECOMMUNICATIONS CORP., LTD., Dongguan Guangdong 523860 (CN)
(72) Inventor: ZHANG, Gong, Dongguan, Guangdong 523860 (CN)
(74) Representative: Manitz Finsterwald Patent- und Rechtsanwaltspartnerschaft mbB
(86) International application number: PCT/CN2019/081890
(87) International publication number: WO 2020/010886

(56) References cited:
- EP-A1- 3 292 685
- CN-A- 101 959 012
- CN-A- 108 600 594
- CN-A- 108 600 599
- CN-U- 206 039 030
- CN-U- 208 386 743
- US-A1- 2011 216 193
- US-A1- 2018 109 660

## Description

### TECHNICAL FIELD

The present disclosure relates to the field of smart device technologies, and in particular to a camera module and an electronic device.

### BACKGROUND

Currently, mobile phones and other electronic devices are often equipped with a camera module to achieve a function of taking pictures. However, in the process of taking photos, the devices are prone to shaking, which affects a capture and collection of light by the camera module, thus adversely affecting an imaging.

EP 3292685 A1 relates to actuators for rotating or tilting an optical element, for example an optical path folding element, comprising a voice coil motor (VCM) and a curved ball-guided mechanism operative to create a rotation or tilt movement of the optical element around a rotation axis upon actuation by the VCM. In some embodiments, an actuator includes two, first and second VCMs, and two curved ball-guided mechanisms operative to create rotation or tilt around respective first and second rotation axes.

US 2018/109660 A1 relates to a camera module including a lens module including lenses and a reflecting module disposed in front of the lens module. The reflecting module is configured to change a path of light to direct the light toward the lens module. The reflecting module includes a holder in which a reflecting member configured to change the path of the light is mounted and a first housing supporting the holder. The holder is configured to slide with respect to the first housing to enable rotation of the reflecting member with respect to a first axis and a second axis.

### SUMMARY OF THE DISCLOSURE

The present disclosure provides a camera module, and an electronic device. The invention is defined by the independent claims.

The present disclosure provides a camera module including a fixing member, a rotating member, a plurality of first balls and a plurality of second balls. The rotating member is rotatably connected to the fixing member and includes a base and a light redirecting member fixed to the base for redirecting an incident light. The plurality of first balls are disposed between the base and the fixing member and capable of moving the rotating member to rotate around a first axis relative to the fixing member. The plurality of second balls is disposed between the base and the fixing member and capable of moving the rotating member to rotate around a second axis relative to the fixing member. The direction of the first axis is perpendicular to the direction of the second axis. Centers of the plurality of first balls are located on the first axis, and centers of the plurality of second balls are located on the second axis.

Further, the present disclosure provides an electronic device including a front case, a display embedded in the front case, a rear cover connected to the front case, a first camera module embedded in the rear cover and a second camera module embedded in the rear cover in parallel with the first camera module. The first camera module includes a fixing member, a rotating member connected to the fixing member, a plurality of first balls, a plurality of second balls and a lens assembly. The rotating member is capable of rotating around a first axis and a second axis. The rotating member includes a base and a light redirecting member fixed to the base for redirecting an incident light. The plurality of first balls are disposed between the base and the fixing member, for defining the first axis and capable of moving the rotating member to rotate around the first axis relative to the fixing member. The plurality of second balls are disposed between the base and the fixing member, for defining the second axis and capable of moving the rotating member to rotate around the second axis relative to the fixing member. The lens assembly is movably connected to the fixing member, for transmitting a light passing through the light redirecting member. An optical axis of the lens assembly is perpendicular to the first axis and the second axis.

By arranging a first ball and a second ball between the fixing member and the rotating member of the camera module, the present disclosure enables the rotating member to rotate around the first axis and/or the second axis relative to the fixing member when the fixing member shakes during the shooting process, thereby reducing the influence on the optical path caused by the shaking of the fixing member and keeping the optical path of the camera module stable, thereby improving the image quality of the camera module.

### BRIEF DESCRIPTION OF THE DRAWINGS

To further illustrate technical solutions of embodiments of the present disclosure, drawings needed for description of the embodiments will be briefly introduced. Obviously, the following drawings are only some embodiments of the present disclosure. To any one of skill in the art, other drawings may be obtained without any creative work based on the following drawings.
FIG. 1 is a front-structural schematic view of an electronic device according to an embodiment of the present disclosure.
FIG. 2 is an exploded structural schematic view of an electronic device according to an embodiment of the present disclosure.
FIG. 3 is a rear-structural schematic view of an electronic device according to an embodiment of the present disclosure.
FIG. 4 is a structural schematic view of a housing according to an embodiment of the present disclosure.
FIG. 5 is a structural schematic view of a camera module according to an embodiment of the present disclosure.
FIG. 6 is an exploded structural schematic view of a first camera module according to an embodiment of the present disclosure.
FIG. 7 is a section schematic view of an exploded structure of a first camera module according to an embodiment of the present disclosure.
FIG. 8 is a first section structural schematic view of a first camera module according to an embodiment of the present disclosure.
FIG. 9 is a top view of a partial structure of a first camera module according to an embodiment of the present disclosure.
FIG. 10 is a top view of a fixing member with a top wall removed according to an embodiment of the present disclosure.
FIG. 11 is a structural schematic view of a light redirecting member according to an embodiment of the present disclosure.
FIG. 12 is another structural schematic view of a light redirecting member according to an embodiment of the present disclosure.
FIG. 13 is a schematic view of a light propagation path of a first camera module according to an embodiment of the present disclosure.
FIG. 14 is another schematic view of a light propagation path of a first camera module according to an embodiment of the present disclosure.
FIG. 15 is a schematic view of a rotation of a rotating member around a first axis according to an embodiment of the present disclosure.
FIG. 16 is another schematic view of a rotation of a rotating member around a first axis according to an embodiment of the present disclosure.
FIG. 17 is a top view of a partial structure of a first camera module according to an embodiment of the present disclosure.
FIG. 18 is a side view of a partial structure of a first camera module according to an embodiment of the present disclosure.
FIG. 19 is a schematic view of a rotation of a rotating member around a second axis according to an embodiment of the present disclosure.
FIG. 20 is another schematic view of a rotation of a rotating member around a second axis according to an embodiment of the present disclosure.
FIG. 21 is a second section structural schematic view of a first camera module according to an embodiment of the present disclosure.
FIG. 22 is another exploded structural schematic view of a first camera module according to an embodiment of the present disclosure.
FIG. 23 is another structural schematic view of a fixing member according to an embodiment of the present disclosure.
FIG. 24 is a schematic view of a mating structure of a base and a fixing member according to an embodiment of the present disclosure.
FIG. 25 is a third section structural schematic view of a first camera module according to an embodiment of the present disclosure.
FIG. 26 is a fourth section structural schematic view of a first camera module according to an embodiment of the present disclosure.
FIG. 27 is an exploded structural schematic view of a camera component according to an embodiment of the present disclosure.
FIG. 28 is a section schematic view of a partial structure of an electronic device module according to an embodiment of the present disclosure.
FIG. 29 is a structural schematic view of a camera module provided in the related art.
FIG. 30 is a first flowchart of a shooting method according to an embodiment of the present disclosure.
FIG. 31 is a second flowchart of a shooting method according to an embodiment of the present disclosure.
FIG. 32 is a flowchart of block M20 in FIG. 30.
FIG. 33 is a flowchart of block M26 in FIG. 32.
FIG. 34 is another flowchart of block M26 in FIG. 32.
FIG. 35 is a flowchart of block M28 in FIG. 32.
FIG. 36 is a third flowchart of a shooting method according to an embodiment of the present disclosure.
FIG. 37 is a structural schematic view of a camera component according to a first embodiment of the present disclosure.
FIG. 38 is a structural schematic view of a camera component according to a second embodiment of the present disclosure.
FIG. 39 is a structural schematic view of an electronic device according to a first embodiment of the present disclosure.
FIG. 40 is a structural schematic view of a camera component according to a third embodiment of the present disclosure.
FIG. 41 is a structural schematic view of a camera component according to a fourth embodiment of the present disclosure.
FIG. 42 is a structural schematic view of a camera component according to a fifth embodiment of the present disclosure.
FIG. 43 is a structural schematic view of a camera component according to a sixth embodiment of the present disclosure.
FIG. 44 is a structural schematic view of a housing according to an embodiment of the present disclosure.
FIG. 45 is a structural schematic view of an electronic device according to a second embodiment of the present disclosure.
FIG. 46 is a structural schematic view of an electronic device according to a third embodiment of the present disclosure.
FIG. 47 is a structural schematic view of a camera component according to a seventh embodiment of the present disclosure.
FIG. 48 is a structural schematic view of a bracket according to an embodiment of the present disclosure.
FIG. 49 is a front-structural schematic view of an electronic device according to an embodiment of the present disclosure.
FIG. 50 is a front-structural schematic view of an electronic device according to another embodiment of the present disclosure.

### DETAILED DESCRIPTION

The following will be a clear and complete description of the technical scheme in the embodiments of the present disclosure, in conjunction with the drawings of the present disclosure. It is clear that the embodiments described are only some, but not all, of the embodiments of the present disclosure. Based on the embodiments in the present disclosure. All other embodiments obtained by those of ordinary skills in the art without creative work are within the scope of the present disclosure.

The present disclosure provides a camera module including a fixing member, a rotating member, a first ball and a second ball. The rotating member is rotatably connected to the fixing member and includes a base and a light redirecting member fixed to the base for redirecting an incident light. The first ball is disposed between the base and the fixing member and capable of moving the rotating member to rotate around a first axis relative to the fixing member. The second ball is disposed between the base and the fixing member and capable of moving the rotating member to rotate around a second axis relative to the fixing member.

In some embodiments, a number of the first balls is more than one, centers of the first balls are located on the first axis; a number of the second balls is more than one, centers of the second balls are located on the second axis.

In some embodiments, the number of the first balls and that of the second balls are both two.

In some embodiments, the camera module further includes a connecting member disposed between the fixing member and the rotating member; the first ball is disposed between the rotating member and the connecting member and capable of moving the rotating member to rotate around the first axis relative to the fixing member and the connecting member; the second ball is disposed between the fixing member and the connecting member such that the connecting member and the rotating member may rotate around the second axis relative to the fixing member.

In some embodiments, the base includes a first side wall, a first rotation slot matched to the first ball is defined on the first side wall of the base; the connecting member includes a first outer wall surface facing the first side wall of the base, a second rotation slot is defined on the first outer wall surface of the connecting member facing the first rotation slot and matched to the first ball; the first ball is accommodated in the first rotation slot and the second rotation slot, a first gap is defined between the first side wall of the base and the first outer wall surface of the connecting member, such that the rotating member is capable of rotating around the first axis within a range defined by the first gap by a rotation of the first ball in the first rotation slot and the second rotation slot.

In some embodiments, the connecting member includes a second outer wall surface disposed back to the first outer wall surface, a third rotation slot matched to the second ball is defined on the second outer wall surface of the connecting member; the fixing member includes a first side wall facing the second outer wall surface of the connecting member, a fourth rotation slot facing the third rotation slot and matched to the second ball is defined on the first side wall of the fixing member; the second ball is accommodated in the third rotation slot and the fourth rotation slot, a second gap is defined between the second outer wall surface of the connecting member and the first side wall of the fixing member, such that the rotating member is capable of rotating around the second axis within a range defined by the second gap by a rotation of the second ball in the third rotation slot and the fourth rotation slot.

In some embodiments, the camera module includes a first drive mechanism connected to the base, for driving the base to drive the rotating member to rotate around the first axis; and a second drive mechanism connected to the base, for driving the base to drive the rotating member to rotate around the second axis.

In some embodiments, the base includes a second side wall disposed on a side of the first side wall of the base and connected to the first side wall of the base, the fixing member includes a second side wall connected to the first side wall of the fixing member and disposed facing the second side wall of the base; the first drive mechanism includes: a first magnet, fixed to the second side wall of the base; and a first coil, disposed on the second side wall of the fixing member corresponding to the first magnet; wherein when the first coil is energized, the first magnet undergoes a movement to drive the base to drive the light redirecting member to rotate around the first axis.

In some embodiments, a first mounting slot is defined on the second side wall of the base, the first magnet is fixed in the first mounting slot by means of an adhesive.

In some embodiments, the base includes a third side wall connected to the first side wall of the base, the fixing member includes a third side wall connected to the first side wall of the fixing member and disposed facing the third side wall of the base; the first drive mechanism includes: a second magnet, fixed to the third side wall of the base; and a second coil, disposed on the third side wall of the fixing member corresponding to the second magnet; wherein when the second coil is energized, the second magnet undergoes a movement to drive the base to drive the light redirecting member to rotate around the first axis.

In some embodiments, a second mounting slot is defined on the third side wall of the base, the second magnet is fixed in the second mounting slot by means of an adhesive.

In some embodiments, the base includes a bottom wall disposed on a side of the first side wall of the base and connected to the first side wall of the base, the fixing member includes a bottom side wall disposed on a side of the first side wall of the fixing member, connected to the first side wall of the fixing member and disposed facing the bottom wall of the base; the second drive mechanism includes: a third magnet, fixed to the bottom wall of the base; and a third coil, disposed on the bottom wall of the fixing member corresponding to the third magnet; wherein when the third coil is energized, the third magnet undergoes a movement to drive the base to drive the light redirecting member to rotate around the second axis.

In some embodiments, a third mounting slot is defined on the bottom wall of the base, the third magnet is fixed in the third mounting slot by means of an adhesive.

In some embodiments, the camera module includes a first magnetic member, fixed on the first side wall of the base; and a second magnetic member, fixed on the first side wall of the fixing member; wherein a polarity of a magnetic pole on a side of the first magnetic member facing the second magnetic member is opposite to a polarity of a magnetic pole on a side of the second magnetic member facing the first magnetic member, such that the base, the connecting member and the fixing member are positional limited through an attract of opposite polarities.

In some embodiments, the first magnetic member includes a fourth magnet, a fourth mounting slot matched to the fourth magnet is defined on the first side wall of the base, the fourth magnet is fixed in the fourth mounting slot by means of an adhesive; the second magnetic member includes a fifth magnet, a fifth mounting slot matched to the fifth magnet is defined on the first side wall of the fixing member, the fifth magnet is fixed in the fifth mounting slot by means of the adhesive.

In some embodiments, the first axis and the second axis are perpendicular to each other.

In some embodiments, the camera module includes a lens assembly movably connected to the fixing member, for transmitting a light passing through the light redirecting member; an optical axis of the lens assembly is perpendicular to the first axis and the second axis.

In some embodiments, the lens assembly includes: a moving member; a lens unit, fixed to the moving member, the optical axis of the lens assembly being an optical axis of the lens unit; and a third drive mechanism, connected to the fixing member and the moving member, for driving the moving member along the optical axis of the lens unit.

In some embodiments, the moving member has a substantially cylindrical shape; the lens unit includes a plurality of lenses spaced in the moving element along a moving direction of the moving element.

In some embodiments, the moving member includes at least two clips; the lens unit includes a plurality of lenses sandwiched between the at least two clips and spaced along a moving direction of the moving member.

In some embodiments, a number of the lens units, a number of the moving members, and a number of the third drive mechanisms are each more than one; each lens unit includes a lens and is fixedly connected to the moving member; each third drive mechanism is connected to one of the moving members to drive the one of the moving members independently.

In some embodiments, the light redirecting member is a prism, the prism including: a light incident surface; a light reflecting surface, connected to the light incident surface and inclined; and a light emitting surface, connected to the light incident surface; wherein the incident light enters from the light incident surface, is redirected by the light reflecting surface, and is emitted from the light emitting surface.

In some embodiments, the light emitting surface is connected to the light reflecting surface.

In some embodiments, the prism includes: a backlight surface disposed back to the light incident surface, wherein the light reflecting surface is connected to the backlight surface and the light incident surface; the light emitting surface is disposed back to the backlight surface; the light emitting surface is connected to and disposed between the backlight surface and the light incident surface.

In some embodiments, the light incident surface is disposed parallel to the backlight surface.

In some embodiments, the light incident surface and the backlight surface are both perpendicular to the light emitting surface.

In some embodiments, a distance range between the backlight surface and the light incident surface is about 4.8 mm to about 5.0 mm.

In some embodiments, the first axis is perpendicular to the light incident surface, the second axis is parallel to the light incident surface and the light reflecting surface.

In some embodiments, the light reflecting surface phase is inclined at about 45 degrees relative to the light incident surface.

In some embodiments, a hardening layer is formed on surfaces of the incident light surface, the light reflecting surface, and the light emitting surface.

In some embodiments, the light redirecting member is a plane mirror.

In some embodiments, the camera module includes an image sensor, connected to the fixing member, for sensing a light passing through the lens assembly.

Further, the present disclosure provides a camera module including a fixing member, a rotating member, a plurality of first balls and a plurality of second balls. The rotating member is connected to the fixing member, and capable of rotating around a first axis and a second axis. The rotating member includes a base and a light redirecting member fixed to the base for redirecting an incident light. The plurality of first balls are disposed between the base and the fixing member along an axial direction of the first axis, and capable of moving the rotating member to rotate around the first axis relative to the fixing member. The plurality of second balls are disposed between the base and the fixing member along an axial direction of the second axis, and capable of moving the rotating member to rotate around the second axis relative to the fixing member.

Further, the present disclosure provides a periscope camera module including a fixing member, a rotating member, a connecting member, a plurality of first balls and a plurality of second balls. The rotating member is connected to the fixing member and capable of rotating around a first axis and a second axis. The rotating member includes a base and a light redirecting member fixed to the base for redirecting an incident light. The light redirecting member includes a light incident surface and a light reflecting surface connected to the light incident surface and inclined. The connecting member is disposed between the fixing member and the rotating member. The plurality of first balls are disposed between the base and the fixing member, for defining the first axis such that the rotating member may rotate around the first axis relative to the fixing member and the connecting member. The plurality of second balls are disposed between the base and the fixing member, for defining the second axis such that the rotating member and the connecting member may rotate around the second axis relative to the fixing member.

Further, the present disclosure provides a camera assembly including a first camera module and a decorating member. The first camera module includes a fixing member, a rotating member, rotatably connected to the fixing member, a plurality of first balls and a plurality of second balls. The fixing member is defined with a light inlet. The decorating member is disposed around an outer circumference of the light inlet. The rotating member includes a base and a light redirecting member fixed to the base corresponding to the light inlet, for redirecting an incident light. The plurality of first balls are disposed between the base and the fixing member and capable of moving the rotating member to rotate around a first axis relative to the fixing member. The plurality of second balls are disposed between the base and the fixing member and capable of moving the rotating member to rotate around a second axis relative to the fixing member.

In some embodiments, the fixing member includes a top wall and a side wall disposed around the top wall, the light inlet is defined on the top wall, the top wall is defined with a groove; a part of the decorating member is accommodated in the groove.

In some embodiments, the groove is defined at a connection of the top wall and the side wall.

In some embodiments, the groove is defined on opposite sides of the light inlet; or, the groove is defined around the outer circumference of the light inlet.

In some embodiments, the decorating member includes: a main body portion, defined with a first through hole, the first through hole corresponding to the light inlet; and a convex edge, disposed at a bottom of the main body portion and extending in a radial direction of the first through hole away from the first through hole.

In some embodiments, the camera assembly includes a second camera module, wherein the second camera module includes: a shell, defined with an incident hole; and an imaging assembly disposed within the shell; wherein the first camera module and the second camera module are arranged side by side, the main body portion is arranged around the outer circumference of the light inlet, the main body portion is defined with a second through hole corresponding to the incident hole.

Further, the present disclosure provides an electronic device including a front case, a display embedded in the front case, a rear cover connected to the front case, a first camera module embedded in the rear cover and a second camera module embedded in the rear cover in parallel with the first camera module. The first camera module includes a fixing member, a rotating member connected to the fixing member, a plurality of first balls, a plurality of second balls and a lens assembly. The rotating member is capable of rotating around a first axis and a second axis. The rotating member includes a base and a light redirecting member fixed to the base for redirecting an incident light. The plurality of first balls are disposed between the base and the fixing member, for defining the first axis such that the rotating member may rotate around the first axis relative to the fixing member. The plurality of second balls are disposed between the base and the fixing member, for defining the second axis such that the rotating member may rotate around the second axis relative to the fixing member. The lens assembly is movably connected to the fixing member, for transmitting a light passing through the light redirecting member. An optical axis of the lens assembly is perpendicular to the first axis and the second axis.

In some embodiments, the first camera module is a periscopic telephoto camera module and the second camera module is a wide-angle camera module.

Further, the present disclosure provides a mobile terminal including a front case, a display embedded in the front case and including a display area, a rear cover connected to the front case, a first camera module embedded in the rear cover, and a second camera module embedded in the rear cover in parallel with the first camera module. A projection of the first camera module and the second camera module on the display is located in the display area. The first camera module includes a fixing member, a rotating member connected to the fixing member, a connecting member disposed between the fixing member and the rotating member, a plurality of first balls, a first drive mechanism, a plurality of second balls, a second drive mechanism, a lens assembly and an image sensor. The rotating member is capable of rotating around a first axis and a second axis. The rotating member includes a base and a light redirecting member fixed to the base for redirecting an incident light. The light redirecting member includes a light incident surface and a light reflecting surface connected to the light incident surface and inclined. The plurality of first balls are disposed between the base and the fixing member, for defining the first axis. The first drive mechanism is connected to the base, for driving the base to drive the rotating member to rotate around the first axis relative to the fixing member and the connecting member. The plurality of second balls are disposed between the base and the fixing member, for defining the second axis. The second drive mechanism is connected to the base, for driving the base to drive the rotating member and the connecting member to rotate around the second axis relative to the fixing member. The lens assembly is movably connected to the fixing member, for transmitting a light passing through the light redirecting member. An optical axis of the lens assembly is perpendicular to the first axis and the second axis. The image sensor is connected to the fixing member, for sensing a light passing through the lens assembly.

Further, the present disclosure provides a shooting method of a camera, the camera including a fixing member, a rotating member, a first ball and a second ball. The rotating member is rotatably connected to the fixing member and includes a base and a light redirecting member fixed to the base. The light redirecting member is configured to redirect an incident light. The first ball and the second ball are disposed between the base and the fixing member. The shooting method includes: detecting and obtaining a shaking parameter of the fixing member, and generating a control signal corresponding to the shaking parameter; and configuring a control signal to drive the rotating member to rotate around a first axis relative to the fixing member via the first ball, and around a second axis relative to the fixing member via the second ball.

In some embodiments, the shaking parameter includes a rotation angle of the fixing member around the first axis and a rotation angle around the second axis; the detecting and obtaining a shaking parameter of the fixing member, and generating a control signal corresponding to the shaking parameter include: detecting and obtaining the rotation angle of the fixing member around the first axis and the rotation angle of the fixing member around the second axis; and generating a first control signal corresponding to the rotation angle of the fixing member around the first axis, and a second control signal corresponding to the rotation angle of the fixing member around the second axis. The configuring a control signal to drive the rotating member to rotate around a first axis relative to the fixing member via the first ball, and around a second axis relative to the fixing member via the second ball includes: configuring the first control signal to drive the rotating member to rotate a first angle compensation amount via the first ball relative to the fixing member around the first axis; and configuring the second control signal to drive the rotating member to rotate a second angle compensation amount via the second ball relative to the fixing member around the second axis.

In some embodiments, the camera includes a first drive mechanism and a second drive mechanism, the first drive mechanism and the second drive mechanism both being connected to the base; the configuring a control signal to drive the rotating member to rotate around a first axis relative to the fixing member via the first ball, and around a second axis relative to the fixing member via the second ball includes: configuring the first control signal to control the first drive mechanism to drive the rotating member to rotate the first angle compensation amount via the first ball relative to the fixing member around the first axis; and configuring the second control signal to control the second drive mechanism to drive the rotating member to rotate the second angle compensation amount via the second ball relative to the fixing member around the second axis.

In some embodiments, the first drive mechanism includes a first coil and a first magnet, the first coil being fixed to the fixing member and the first magnet being fixed to the base corresponding to the first coil; the configuring the first control signal to control the first drive mechanism to drive the rotating member to rotate the first angle compensation amount via the first ball relative to the fixing member around the first axis includes: inputting a first current with a first direction and a first magnitude to the first coil based on the first control signal to generate a magnetic field in the first coil; and moving, by the first magnet, under an action of the magnetic field generated by the first coil to drive the base for driving the light redirecting member to rotate the first angle compensation amount via the first ball relative to the fixing member around the first axis.

In some embodiments, the first drive mechanism includes a second coil and a second magnet, the second coil being fixed to the fixing member and the second magnet being fixed to the base corresponding to the second coil; the configuring the second control signal to control the second drive mechanism to drive the rotating member to rotate the second angle compensation amount via the second ball relative to the fixing member around the second axis includes: inputting a second current with a second direction and a second magnitude to the second coil based on the first control signal to generate a magnetic field in the second coil; and moving, by the second magnet, under an action of the magnetic field generated by the second coil to drive the base for driving the light redirecting member to rotate the second angle compensation amount via the first ball relative to the fixing member around the first axis.

In some embodiments, the second drive mechanism includes a third coil and a third magnet, the third coil being fixed to the fixing member and the third magnet being fixed to the base corresponding to the third coil; the configuring the second control signal to control the second drive mechanism to drive the rotating member to rotate the second angle compensation amount via the second ball relative to the fixing member around the second axis includes: inputting a third current with a third direction and a third magnitude to the third coil based on the second control signal to generate a magnetic field in the third coil; and moving, by the third magnet, under an action of the magnetic field generated by the third coil to drive the base cooperatively with the second magnet for driving the light redirecting member to rotate the second angle compensation amount via the second ball relative to the fixing member around the second axis.

In some embodiments, the first axis and the second axis are perpendicular to each other.

In some embodiments, the camera includes a lens assembly and a third drive mechanism, the lens assembly being movably connected to the fixing member under a drive of the third drive mechanism for transmitting a light redirected by the light redirecting member; an optical axis of the lens assembly is perpendicular to the first axis and the second axis; the shooting method includes: detecting and obtaining a displacement of the fixing member in a direction of the optical axis of the lens assembly; generating a third control signal corresponding to the displacement of the fixing member in the direction of the optical axis of the lens assembly; and configuring the third control signal to control the third drive mechanism to drive the lens assembly to move a displacement compensation amount along the optical axis of the lens assembly.

In some embodiments, the camera also includes an image sensor connected to the fixing member, for sensing a light passing through the lens assembly.

References herein to "embodiments" imply that a particular feature, structure, or characteristic described in conjunction with an embodiment may be included in at least one embodiment of the present disclosure. The presence of the phrase at various points in the specification does not necessarily mean that all embodiments are the same, nor are they independent or alternative embodiments that are mutually exclusive with other embodiments. It is understood both explicitly and implicitly by those of ordinary skills in the art that the embodiments described herein may be combined with other embodiments.

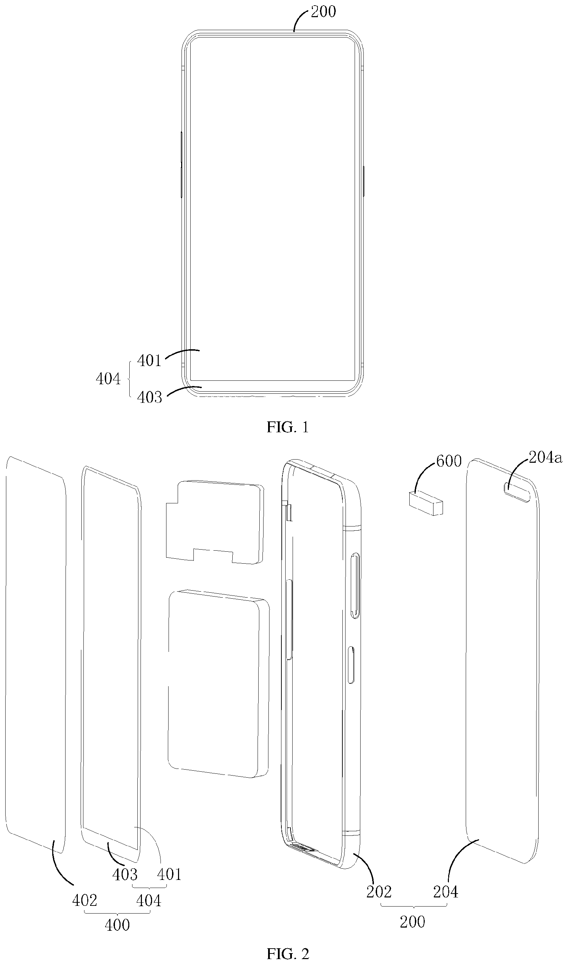

Referring to FIGs. 1 and 2, the electronic device according to some embodiments of the present disclosure may include a housing 200, a display assembly 400, and a camera assembly 600. Both the display assembly 400 and the camera assembly 600 are disposed on the housing 200. Specifically, the electronic device may be an electronic device or a mobile terminal, or other electronic devices with display and camera functions, such as a mobile phone, a tablet computer, a laptop computer, a smart bracelet, a smart watch, a smart helmet, smart glasses, and the like. The mobile phone is described as an example of embodiments of the present disclosure. Understandably, the specific form of the electronic device may also be others and is not limited herein.

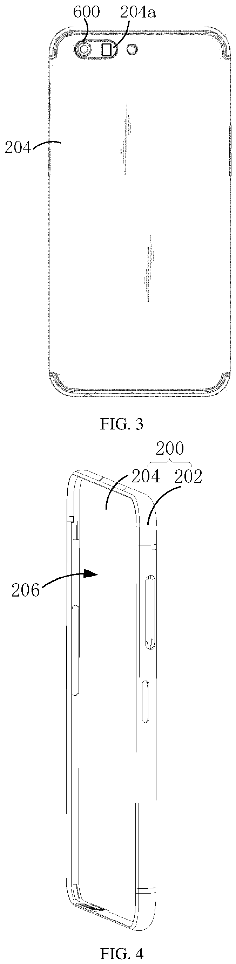

Referring specifically to FIGs. 3 and 4, the housing 200 is an outer shell of the mobile phone, which may have functions of protecting internal parts thereof (e.g., a main board, a battery, etc.). The housing 200 may include a front case 202 and a rear cover 204 connected to the front case 202. The front case 202 and the rear cover 204 may cooperatively define a capacitive cavity 206 for receiving the internal parts of the mobile phone.

The rear cover 204 may have a substantially rectangular or rounded rectangular shape. The rear cover 204 may be made of plastic, glass, ceramic, fiber composite, metal (e.g., stainless steel, aluminum, etc.), or other suitable materials or a combination of these materials. In some embodiments, a portion of the rear cover 204 may be made of a dielectric or other low conductivity material. In some embodiments, the rear cover 204 or at least some of the structures constituting the rear cover 204 may be formed from metal components.

The front case 202 extends vertically from edges of the four sides of the rear cover 204. The front case 202 is enclosed by four borders connected at beginnings and ends.

The display assembly 400 may be electrically connected to the camera assembly 600, the battery, the processor, etc., for displaying information. Referring to FIGs. 1-2, the display assembly 400 may include a cover plate 402 and a display 404. The display 404 is embedded in the front case 202. The cover plate 402 covers the display 404 for protecting the display 404. The cover 402 may be made of a light-transmissive material such as glass, plastic, or the like. The display 404 includes a display area 401 and a non-display area 403. The non-display area 403 is arranged on a side of the display area 401, or enclosing a periphery of the display area 401.

The camera assembly 600 may be disposed on a back side of the mobile phone as a rear camera. It shall be understood that the camera assembly 600 may also be disposed on a front side of the mobile phone as a front camera. As shown in FIG. 3, the camera assembly 600 is embedded in an upper left position of the rear cover 204. Of course, the camera assembly 600 may also be arranged at other positions such as an upper middle or upper right position of the rear cover 204 according to specific needs, which is not limited herein. In particular, a projection of the camera assembly 600 on the display 404 may be disposed within the display area 401 of the display 404.

It shall be understood that orientations or position relationships indicated by terms of "up", "down", "left", "right", etc. herein and hereinafter are based on orientations or position relationships shown in the drawings only for the purpose of facilitating and simplifying the description. They do not indicate or imply that the devices or components referred to must have a particular orientation, be constructed or operated in a particular orientation, which are therefore not to be construed as a limitation of the present disclosure.

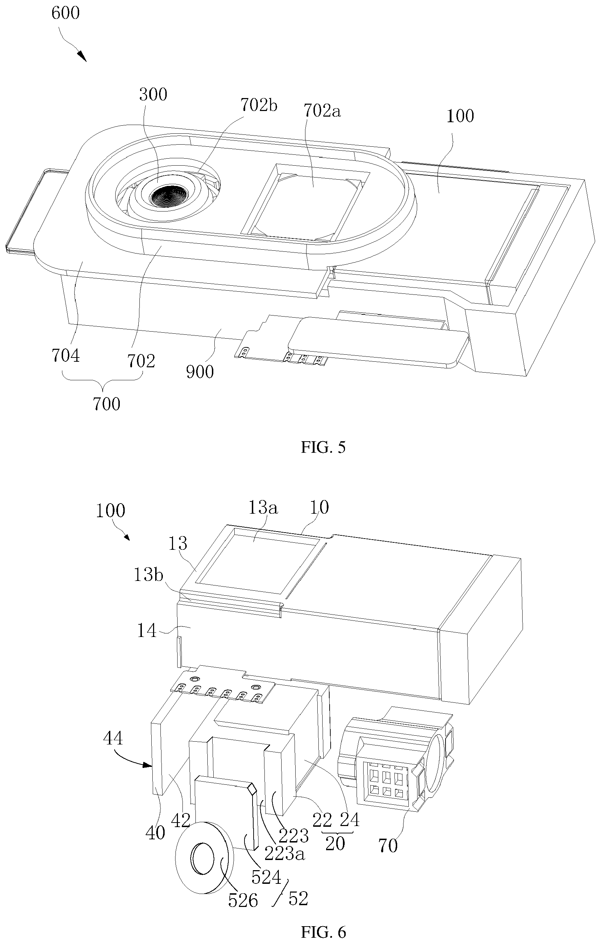

As shown in FIG. 5, in some embodiments, the camera assembly 600 may include a first camera module 100, a second camera module 300, a decorating member 700, and a bracket 900. The first camera module 100 is a periscopic telephoto camera module. The second camera module 300 is a wide-angle camera module. The first camera module 100 and the second camera module 300 are arranged side by side. The first camera module 100 and the second camera module 300 may also be an integrated camera module.

It is to be noted that the terms of "first", "second", etc. herein and hereinafter are for descriptive purposes only. They are not to be construed as indicating or implying relative importance or implicitly indicating a number of technical features. Accordingly, a feature that qualifies as "first", "second", etc. may explicitly or implicitly include one or more of the described features.

Further, as shown in FIGs. 6 to 9, the first camera module 100 is a periscopic camera module. Compared to a vertical camera module, the periscopic camera module may be configured to change a light propagation path requiring less height of the camera module, which may reduce an overall thickness of the electronic device. Specifically, the first camera module 100 may include elements such as a fixing member 10, a rotating member 20 disposed on and rotatable relative to the fixing member 10, a ball 30, a connecting member 40 disposed between the fixing member 10 and the rotating member 20, a drive mechanism 50, a magnetic member 60, a lens assembly 70, and an image sensor 80.

The connecting member 40 is disposed between the fixing member 10 and the rotating member 20. The connecting member 40 is position-limited via the magnetic member 60 to the fixing member 10, the connecting member 40 and the rotating member 20. The ball 30 includes a first ball 32 and a second ball 34. The first ball 32 is disposed between the rotating member 20 and the connecting member 40. The second ball 32 is disposed between the connecting member 40 and the fixing member 10. After entering the first camera module 100, an incident light is redirected via the rotating member 20 and then transmitted via the lens assembly 70 to the image sensor 80. The light is sensed by the image sensor 80.

The fixing member 10 is configured to connect, carry, fix, etc. other elements of the first camera module 100, fixedly connected with other parts of the phone. In this way, the first camera module 100 is arranged integrally in the phone. Specifically, the fixing member 10 may be a mounting bracket on which other elements of the first camera module 100 are directly or indirectly mounted. Or, the fixing member 10 may be a shell, such as a box-shaped shell with a capacitive space, in which other elements of the first camera module 100 are accommodated.

Specifically, the fixing member 10 may include a top wall 13, a plurality of side walls 14 connected to the top wall 13, and a bottom wall 15 facing the top wall 13. The top wall 13, the plurality of side walls 14, and the bottom wall 15 enclose a capacitive space to accommodate the rotating member 20. In the embodiments, a number of the side walls 14 is four. In other embodiments, one or both of the top wall 13 and the bottom wall 15 may be omitted and only two side walls 14 are required.

Further, as shown in FIG. 6, the top wall 13 is defined with a light inlet 13a. An external light may enter the first camera module 100 through the light inlet 13a. Further, a groove 13b running through or not through the top wall 13 is defined on the top wall 13 at opposite sides of the light inlet 13a. The groove 13b may be achieved by stamping or the like. The groove 13b matches the decorating member 700 at least partially. It should be noted that a position of the groove 13b is not limited to the two sides of the light inlet 13a, but may also be curved and enclosed around an entire periphery of the light inlet 13a, or on the side walls 14 of the fixing member 10, or at other positions.

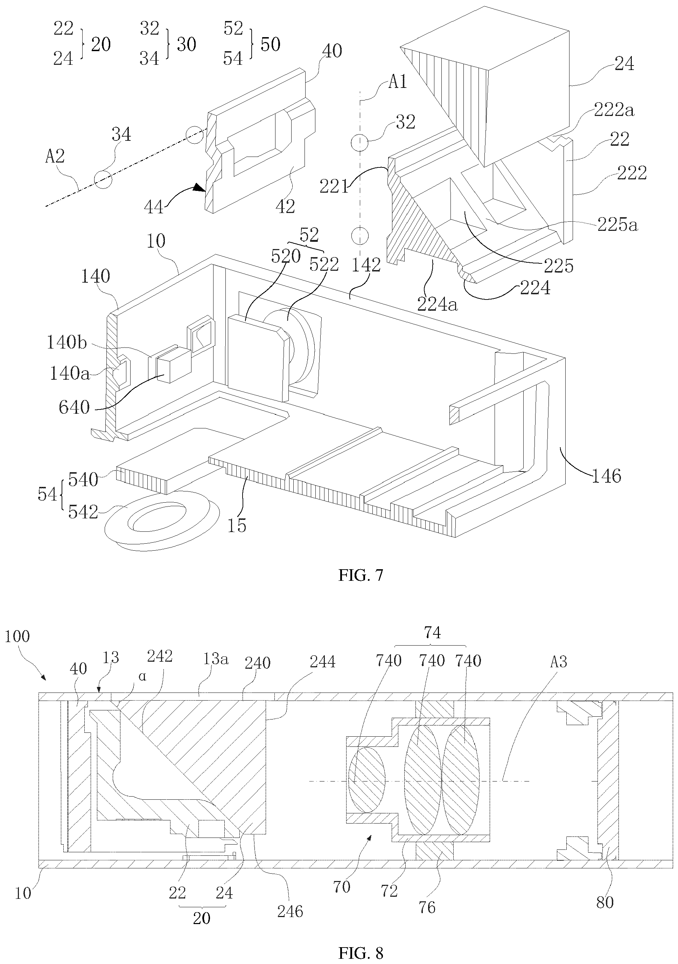

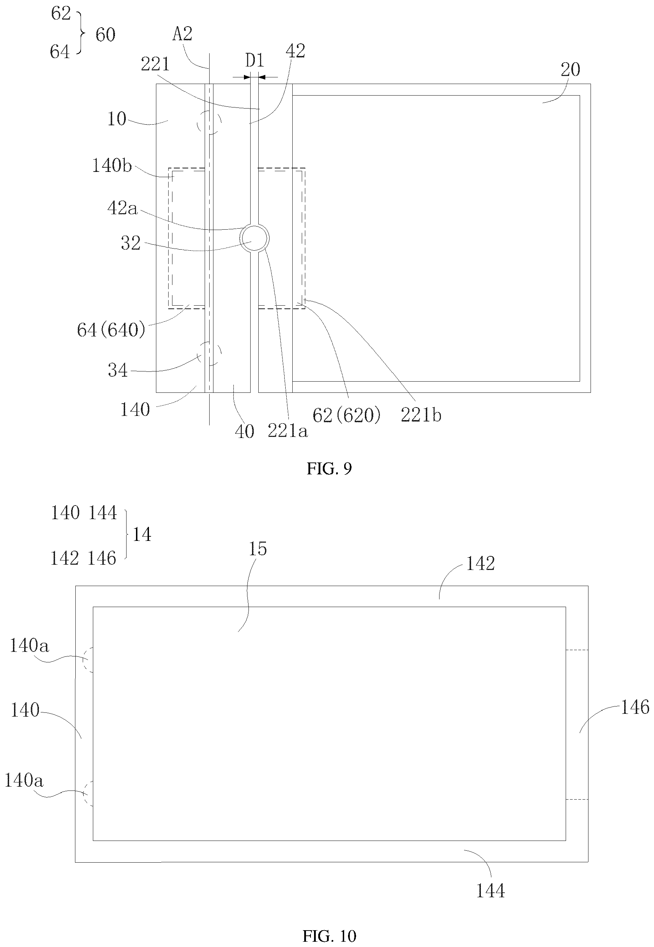

Further, as shown in FIGs. 7 and 10, the side wall 14 of the fixing member 10 may include a first side wall 140, a second side wall 142 connected perpendicularly to the first side wall 140, a third side wall 144 disposed parallel to the second side wall 142, and a fourth side wall 146 connected perpendicularly to the second side wall 142 and the third side wall 144 and disposed parallel to the first side wall 140. The first side wall 140 is disposed on a side of the connecting member 40 away from the rotating member 20, and are all connected perpendicularly to the second side wall 142 and the third side wall 144. The fourth side wall 146 is defined with an opening, such that the incident light may be transmitted to other parts through the opening after redirecting and other operations.

The bottom wall 15 is arranged parallel and facing the top wall 13 and connected to a side of the first side wall 140, the second side wall 142, the third side wall 144, and the fourth side wall 146 away from the top wall 13, respectively.

Further, a number of side walls 14 of the fixing member 10 may be two. The side walls 14 are connected and arranged on opposite sides of the top wall 13. In some embodiments, a number of the grooves 13b is two. Each of the grooves 13b is arranged at a connection of the top wall 13 and the side walls 14 on opposite sides of the light inlet 13a. Specifically, the grooves 13b are both configured in a long strip in parallel, as shown in FIG. 6.

As shown in FIGs. 6 and 7, the rotating member 20 may include a base 22 and a light redirecting member 24.

The base 22 may include a first side wall 221, a second side wall 222 connected to the first side wall 221, a third side wall 223 disposed parallel to the second side wall 222 and connected to the first side wall 221, a bottom wall 224 connected to the first side wall 221, the second side wall 222 and the third side wall 223, and a guide plate 225 disposed in a space enclosed by the first side wall 221, the second side wall 222, the third side wall 223 and the bottom wall 224. The first side wall 221 is disposed on a side of the base 22 near the connecting member 30. The second side wall 222 is facing to the second side wall 142 of the fixing member 10 and is connected to on a side of the first side wall 221. The third side wall 223 is facing the third side wall 144 of the fixing member 10 and is connected to the other side of the first side wall 221. The bottom wall 224 of the base 22 is facing the bottom wall 15 of the fixing member 10 and is connected to a side of the first side wall 221, the second side wall 222 and the third side wall 223 near the bottom wall 15 of the fixing member 10, respectively. The guide plate 225 is arranged extending from the first side wall 221 in a direction away from the first side wall 140 of the fixing member 10. The guide plate 225 is arranged with an inclined surface 225a relative to the bottom wall 224. A number of the guide plates 225 may be one or more, and the one or more inclined surfaces 225a formed may be configured to support the light redirecting member 24.

The light redirecting member 24 is fixedly mounted on the base 22 and corresponds to the light inlet 13a of the fixing member 10 for receiving the incident light entering from the light inlet 13a, to steer the incident light. Specifically, the light redirecting member 24 may be fixed to the inclined surface 225a at the guide plate 225 of the base 22 by means of adhesive bonding or the like. In this way, the light redirecting member 24 and the base 22 may rotate synchronously relative to the fixing member 10. The light redirecting member 24 may be an element capable of changing the light propagation direction through reflection, refraction, etc., such as a flat mirror, prism, etc.

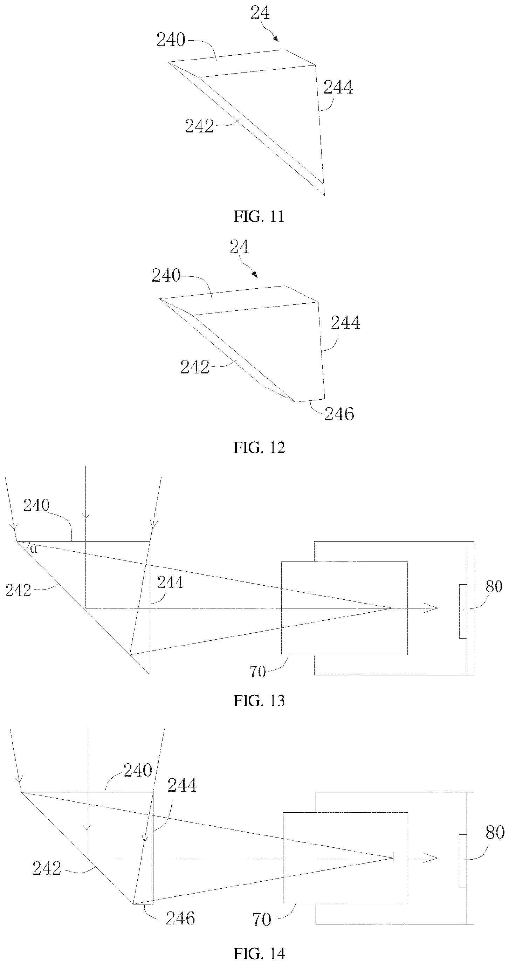

In cases of the light redirecting member 24 as a prism, as shown in FIG. 11, the light redirecting member 24 may be a triple prism. The triple prism may include a light incident surface 240, a light reflecting surface 242, and a light emitting surface 244. Specifically, the light incident surface 240 corresponds to the light inlet 13a of the fixing member 10 and is connected in sequence with the light reflecting surface 242 and the light emitting surface 244. A cross-section of the light incident surface 240, the light reflecting surface 242 and the light emitting surface 244 may be an isosceles right-angled triangle. Specifically, the light reflecting surface 242 is configured to be tilted at a 45-degree relative to the light incident surface 240 and the light emitting surface 244, i.e., an angle α between the two is 45 degrees. It should be noted that a degree of tilt of the inclined surface 225a of the guide plate 225 is consistent with that of the light reflecting surface 242. In this way, the light redirecting member 24 is fixed to the base 22 through a matching of the light reflecting surface 242 and the inclined surface 225a of the guide plate 225. Further, the light incident surface 240 and the light emitting surface 244 are perpendicular to each other. An incident light enters from the light incident surface 240 after passing through the light inlet 13a, and is further emitted from the light emitting surface 244 after being reflected and redirected by the light reflecting surface 242. It is understood that the incident light may also be emitted from the opening of the fourth side wall 146 of the fixing member 10 after refraction through the triple prism.

As shown in FIG. 12, the light redirecting member 24 may also be a quadruple prism. In addition to the above-mentioned the light incident surface 240, the light reflecting surface 242 and the light emitting surface 244 of the triple prism, the quadruple prism further includes a backlight surface 246 connected to and disposed between the light reflecting surface 242 and the light emitting surface 244 and disposed parallel to the light incident surface 240 back-to-back. A distance range between the backlight surface 246 and the light incident surface 240 may be 4.8-5.0 mm, specifically such as 4.8 mm, 4.85 mm, 4.9 mm, 4.95 mm, 5.0 mm, and the like. The light redirecting member 24 formed from the light incident surface 240 and the backlight surface 246 configured based on the distance range is moderately sized to fit well into the first camera module 100. In this way, a more compact and miniaturized first camera module 100, camera assembly 600 and electronic device to meet more consumer needs.

It should be noted that, to a certain extent, the quadruple prism may be equivalent to a prism formed by excising a portion of the corner angle consisting of the light reflecting surface 242 and the light emitting surface 244 of the above-mentioned triple prism. It is to be specified that, as shown in FIGs. 13 and 14, due to the need for incident light, the light reflecting surface 242 is configured to be tilted relative to the horizontal direction in practical applications. The light redirecting member 24 is asymmetrically structured in a direction in which the light is reflected by the light reflecting surface 242, such that an actual optical area of a side of the light reflecting surface 242 away from the light inlet 13a is smaller than that of a side near the light inlet 13a. In this way, a portion of the light reflecting surface 242 away from the light inlet 13a reflects only less or even no light. That is, the portion makes very little or no contribution to the reflection of the light. As for the light redirecting member 24 of the quadruple prism, compared to that of the triple prism, the corner angle of the triple prism away from the light inlet 13a is excised, such that a thickness of the light redirecting member 24 in a direction perpendicular to the light incident surface 240 is reduced without affecting a redirecting effect of the light redirecting member 24 on the incident light. In this way, a lightening and thinning and miniaturization of the first camera module 100 may be reduced. Due to the backlight surface 246, the light redirecting member 24 is further arranged to be fixed to the base 22 via the backlight surface 246, thereby providing a stronger and more stable fixation between the light redirecting member 24 and the base 22.

It should be noted that the above description is not intended to restrict the structure of the light redirecting member 24. For example, the light reflecting surface 242 may also be tilted at other degrees relative to the light incident surface 240, such as 30 degrees, 60 degrees, etc. The light incident surface 240 and the light emitting surface 244 may not be configured vertically, such as tilted at 80 degrees, 90 degrees, etc. The backlight surface 246 may not be parallel to the light incident surface 240. Configurations are not limited as long as the light redirected by the light redirecting member 24 is received by the lens assembly 70.

Further, the prism may be made of a light-transmitting material such as glass or plastic. A reflective material such as silver may be coated on a surface of the light reflecting surface 242 of the prism to enhance the reflection of the incident light. Further, in cases of the prism being made of a brittle material such as glass, a hardening layer may be formed on surfaces of the incident light surface 240, the light reflecting surface 242, the light emitting surface 244, and the backlight surface 246, etc. by hardening the prism, thereby improving a strength of the light redirecting member 24. The hardening treatment may be infiltrating lithium ions or applying films to each surface of the prism without affecting the light conversion of the light redirecting member 24.

It is further noted that a number of the light redirecting members 24 may be one. After once redirected by the light redirecting member 24, the incident light reaches the image sensor 80 by transmission of the lens assembly 70. Of course, the number of the light redirecting members 24 may also be more than one. The incident light may reach the image sensor 80 by transmission of the lens assembly 70 after a plurality of times of redirecting by the light redirecting member 24. The image sensor 80 may be arranged according to actual needs and is not specifically limited herein.

Further, as shown in FIG. 7, the ball 30 may include a first ball 32 and a second ball 34. A number of the first ball 32 and that of the second ball 34 are both two. The first ball 32 and the second ball 34 may be of a same shape, size, and material. Centers of the two first balls 32 are located on a first axis A1. Centers of the two second balls 34 are located on a second axis A2. In this way, the first ball 32 may rotate around the first axis A1 by self-rotation and the second ball 34 may rotate around the second axis A2 by self-rotation. The first axis A1 and the second axis A2 may be perpendicular to each other, with the first axis A1 being perpendicular to the light incident surface 240 and the second axis A2 being parallel to the light incident surface 240 and the light reflecting surface 242. The first axis A1 and the second axis A2 may further both be perpendicular to an optical axis A3 of the lens assembly 70 (as shown in FIG. 8). It is to be noted that the number of the first balls 32 and that of the second balls 34 are not limited to two, but may also be one or three or more than three, etc. The number of the first balls 32 and that of the second balls 34 may be equal or unequal, and may be configured according to actual needs.

Further, as shown in FIG. 7, the connecting member 40 may be disposed between the fixing member 10 and the rotating member 20. In cases of the fixing member 10 as a shell, the connecting member 40 may be disposed between the first side wall 140 of the fixing member 10 and the rotating member 20. Specifically, the connecting member 40 is a plate including a first outer wall surface 42 and a second outer wall surface 44 disposed back to back. The first outer wall surface 42 is facing the first side wall 221 of the base 22. The second outer wall surface 44 is facing the first side wall 140 of the fixing member 10.

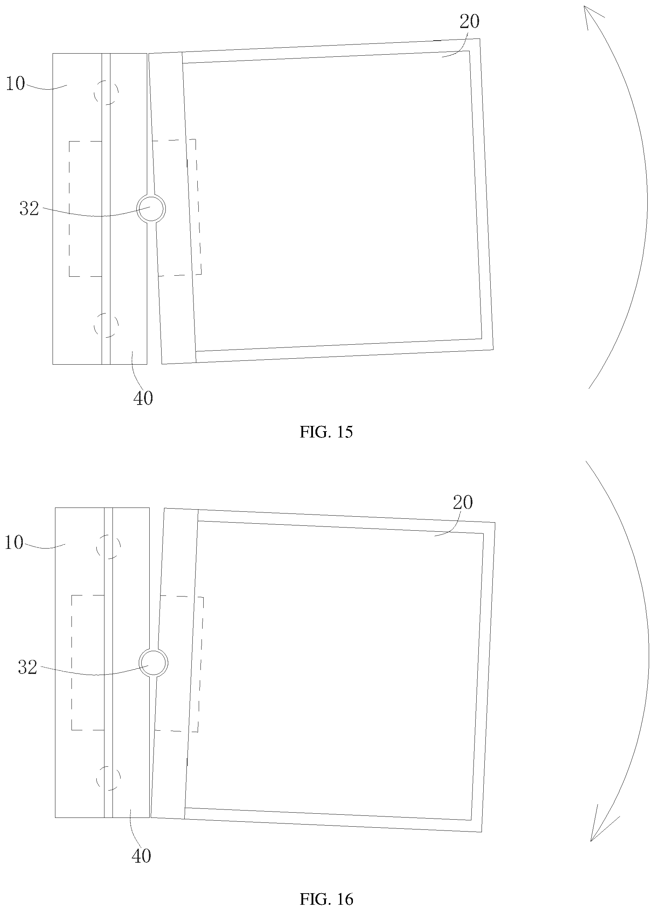

Further, as shown in FIGs. 9, 15 and 16, the first side wall 221 of the base 22 is defined with a first rotation slot 221a matched to the first ball 32 for accommodating at least part of the first ball 32. The first outer wall 42 of the connecting member 40 is defined with a second rotation slot 42a facing the first rotation slot 221a and matched to the first ball 32 for accommodating at least part of the first ball 32. In an assembled state, a part of the first ball 32 is accommodated in the first rotation slot 221a and another part is accommodated in the second rotation slot 42a such that the rotating member 20 may rotate around the first axis A1 (as shown in FIG. 7) within a range defined by a first gap D1 by the rotation of the first ball 32 in the first rotation slot 221a and the second rotation slot 42a.

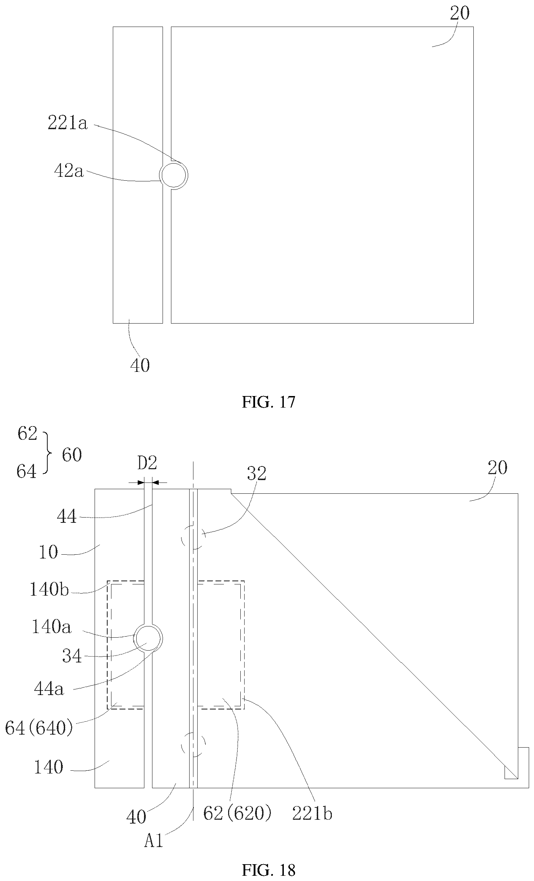

It should be noted that a number of the first rotation slot 221a and that of the second rotation slot 42a correspond to the number of the first balls 32. In cases of the number of the first balls 32 being two, the number of the first rotation slot 221a and that of the second rotation are also both two. Specifically, both the first rotation slot 221a and the second rotation slot 42a may be shaped as a part of a sphere. A radius of the sphere is greater than the radius of the first ball 32, and wherein the relative distance between the first rotation slot 221a and the second rotation slot 42a along the direction perpendicular to the first axis A1 is less than the diameter of the first ball 32 to enable the first ball 32 to accommodate the first rotation slot 221a and the second within the rotation slot 42a and forms a first gap D1 between the first sidewall 221 of the seat 22 and the first outer wall surface 42 of the rotating member 20. In an application scenario, the first and second rotation slots 221a and 42a have the same shape and are axially symmetrical in the direction of the first axis A1, as shown in FIG. 9; in another application scenario, as shown in FIG. 17, the first rotation slot 221a and the second The rotating slots 42a have different shapes, but are also all part of a sphere.

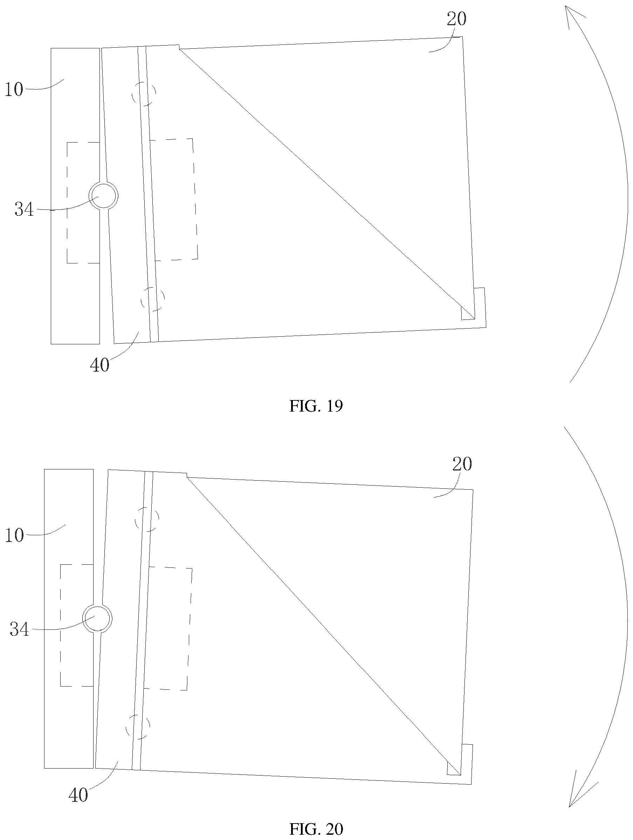

Further, as shown in FIGs. 18 to 20, the second outer wall surface 44 of the connecting member 40 is defined with a third rotation slot 44a matched to the second ball 34 for accommodating at least part of the second ball 34. The first side wall 140 of the fixing member 10 is defined with a fourth rotation slot 140a facing the third rotation slot 44a and matched to the second ball 34 for accommodating at least part of the second ball 34. In an assembled state, a part of the second ball 34 is accommodated in the third rotation slot 44a and another part is accommodated in the fourth rotation slot 140a, such that the rotating member 20 and the connecting member 40 may rotate around the second axis A2 (as shown in FIGs. 7 and 9) within a range defined by a second gap D2 by the rotation of the second ball 34 in the third rotation slot 44a and the fourth rotation slot 140a.

It should be noted that a number of the third rotation slot 44a and that of the fourth rotation slot 140a correspond to the number of the second ball 34. In cases of the number of the second ball 34 being two, the number of the third rotation slot 44a and that of the fourth rotation slot 140a are also both two. Specifically, both the third rotation slot 44a and the fourth rotation slot 140a may be shaped as a part of a sphere. A radius of the sphere is larger than that of the second ball 34. A relative distance between the third rotation slot 44a and the fourth rotation slot 140a along a direction perpendicular to the second axis A2 is less than a diameter of the second ball 34. In this way, the second ball 34 may be accommodated in the third rotation slot 44a and the fourth rotation slot 140a. The second gap D2 may be defined between the first side wall 140 of the fixing member 10 and the second outer wall surface 44 of the connecting member 40. Similar to the shapes of the first rotation slot 221a and the second rotation slot 42a, the shape of the third rotation slot 44a and that of the fourth rotation slot 140a may be same or different, and are not specifically limited herein.

It should be understood that the mobile phone may vibrate to a certain extent due to environmental factors during the process of taking pictures, and the fixing member 10 in the first camera module 100 may be driven to shake. In this way, a certain deviation in an incidence position of the external light, etc. may be caused, and thus the capture and imaging of the light may be adversely affected. In the embodiments, the first ball 32 is arranged between the rotating member 20 and the connecting member 40, and the second ball 34 is arranged between the connecting member 40 and the fixing member 10, such that the rotating member 20 may rotate around the first axis A1 and/or the second axis A2 relative to the fixing member 10. The rotating member 20 may move in opposite directions relative to the fixing member 10 in the direction of the first axis A1 and the second axis A2 perpendicular to each other as well as in the direction perpendicular to the first axis A1 and the second axis A2. In this way, an incidence deviation of the incident light entering from the light inlet 13a due to the shaking of the fixing member 10 may be compensated to keep the optical path stable, and to improve the image quality of the first camera module 100. Moreover, the ball 30 is arranged such that the rotating member 20 may be rotationally connected with the fixing member 10, which can reduce an influence of friction on the rotation of the rotating member 20 due to a small contact area. In this way, a precision of the rotation of the rotating member 20 may be improved, thereby further improving the imaging quality. In addition, the rotating member 20 may rotate around the first axis A1 and/or the second axis A2, and a motion in the direction of the first axis A1 and the second axis A2 as well as in the direction perpendicular to the first axis A1 and the second axis A2 may be thus achieved. Compared to moving directly in a corresponding direction, a space occupied by the rotating member 20 in the direction of the first axis A1 and the second axis A2 during movement may be reduced, thereby reducing a volume of the entire first camera module 100.

Further, a vibration of the electronic device may be monitored by a gyroscope, an accelerometer, etc. arranged in the mobile phone. The drive mechanism 50 may be controlled to drive the rotating member 20 to rotate based on a detected results. Specifically, as shown in FIG. 7, the drive mechanism 50 includes a first drive mechanism 52 and a second drive mechanism 54. The first drive mechanism 52 is configured to drive the rotating member 20 to rotate around the first axis A1 relative to the fixing member 10 via the first ball 32. The second drive mechanism 54 is configured to drive the rotating member 20 to rotate around the second axis A2 relative to the fixing member 10 via the second ball 34.

The first drive mechanism 52 may be an electromagnetic drive mechanism, specifically including a first magnet 520 and a first coil 522. A first mounting slot 222a is defined on the second side wall 222 of the base 22. The first magnet 520 may be fixed in the first mounting slot 222a by means of an adhesive or the like. The first coil 522 corresponds to the first magnet 520 and is arranged on the second side wall 142 of the fixing member 10. When the first coil 522 is energized, the first magnet 520 may undergo a movement to drive the base 22 to rotate the light redirecting member 24 around the first axis A1.

Further, as shown in FIGs. 6 and 10, the first drive mechanism 52 may also include a second magnet 524 and a second coil 526. A second mounting slot 223a is defined on the third side wall 223 of the base 22. The second magnet 524 may be fixed in the second mounting slot 223a by means of an adhesive or the like. The second coil 526 corresponds to the second magnet 524 and is arranged on the third side wall 144. When the second coil 526 is energized, the second magnet 524 may undergo a movement to drive the base 22 to rotate the light redirecting member 24 around the first axis A1 (as shown in FIG. 7).

It should be noted that the rotation of the rotating member 20 around the first axis A1 may be achieved either through driving the base 22 separately by the first magnet 520 and the first coil 522 or the second magnet 524 and the second coil 526, or through driving the base 22 jointly on both sides of the base 22.

Further, as shown in FIG. 7, the second drive mechanism 54 may also be an electromagnetic drive mechanism, which may include a third magnet 540 and a third coil 542. A third mounting slot 224a is defined on the bottom wall 224 of the base 22. The third magnet 540 may be fixed in the third mounting slot 224a by means of an adhesive or the like. The third coil 542 corresponds to the third magnet 540 and is arranged on the bottom wall 15 of the fixing member 10. When the third coil 542 is energized, the third magnet 540 may undergo a movement to drive the base 22 to drive the light redirecting member 24 around the second axis A2.

It is to be noted that the first drive mechanism 52 and the second drive mechanism 54 are not limited to the above-mentioned electromagnetic implementation. For example, both may also be piezoelectric drive mechanisms or memory alloy drive mechanisms and the like.

The piezoelectric drive mechanism may be based on an inverse piezoelectric effect of piezoelectric ceramic materials. When a voltage is applied to the piezoelectric material, the piezoelectric material generates mechanical stress, which is then transformed into mechanical deformation. In this way, the mechanical deformation of the piezoelectric material may be controlled by controlling the voltage applied to the piezoelectric material, thereby generating rotation to drive the base 22. The driving method has advantages of simple structure and low speed. While the memory alloy drive mechanism may be based on characteristics of the shape memory alloy. That is, once the shape memory alloy has memorized any shape, even if deformation occurs, it can still return to the shape before deformation when heated to a certain appropriate temperature, so as to achieve the purpose of driving. The driving method has advantages of rapid dislocation and free direction. In actual production and assembly, different drive mechanisms can be used depending on needs.

Further, as shown in FIGs. 9 and 18, the magnetic member 60 may include a first magnetic member 62 and a second magnetic member 64. The first magnetic member 62 may include a fourth magnet 620 and the second magnetic member 64 may include a fifth magnet 640. A fourth mounting slot 221b matching the fourth magnet 620 is defined on the first side wall 221 of the base 22. The fourth magnet 620 may be fixed in the fourth mounting slot 221b by means of an adhesive or the like. The first side wall 140 of the fixing member 10 is defined with a fifth mounting slot 140b. The fifth mounting slot 140b corresponds to the fourth mounting slot 221b and matches the fifth magnet 640, such that the fifth magnet 640 may be fixed in the fifth mounting slot 140b by means of an adhesive or the like. It should be noted that the polarity of the magnetic pole on a side of the fourth magnet 620 facing the fifth magnet 640 is opposite to the polarity of the magnetic pole on a side of the fifth magnet 640 facing the fourth magnet 620. In this way, the fourth magnet 620 and the fifth magnet 640 may positional limit the base 22 holding the fourth magnet 620, the fixing member 10 holding the fifth magnet 640, and the connecting member 40 disposed between the fourth magnet 620 and the fifth magnet 640 by means of an anisotropic phase attraction.

In the above embodiments, the base 22, the connecting member 40 and the fixing member 10 are positional limited within a certain range, such that the three need not be bound together by a direct connection structure. In this way, when the rotating member 20 rotates around the first axis A1 or the second axis A2 relative to the fixing member 10, the fixing member 10, the connecting member 40 and the base 22 do not disperse, thereby reducing the friction generated during the rotation of the rotating member 20 and making the rotation more precise.

The rotation of the rotating member 20 of the above embodiments relative to the rotation of the fixing member 10 around the first axis A1 and the second axis A2 is achieved through the rotation of the first ball 32 and the second ball 34 and the coordination between the connecting member 40 and the fixing member 10 and the rotating member 10. In some embodiments, the rotation of the rotating member 20 around the first axis may be achieved by means of a guide rail disposed on the fixing member 10 without the need for the connecting member, the first ball, the second ball, and other elements.

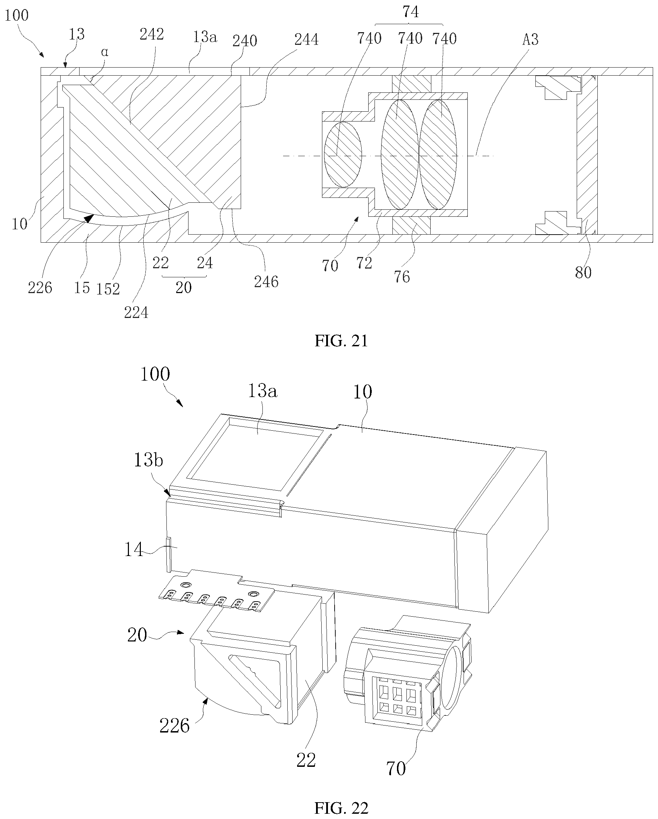

For example, the first camera module 100 may include elements such as the fixing member 10, the rotating member 20 disposed on the fixing member 10 and rotatable relative to the fixing member 10, the drive mechanism 50, the lens assembly 70, and the image sensor 80. The drive mechanism 50, the lens assembly 70, the image sensor 80 and other elements may be the same as those of the above-mentioned embodiments. Specifically, as shown in FIGs. 21 and 22, in some embodiments, the guide rail may be an arcuate rail 152 disposed on the bottom wall 15 of the fixing member 10. A bottom surface of the bottom wall 224 of the base 22 may be an arcuate bottom surface 226. The arcuate bottom surface 226 matches the arcuate rail 152, i.e., a central axis of the arcuate bottom surface 226 coincides with that of the arcuate rail 152. In this way, a coordination of the rotating member 20 and the base 22 is more compact and the rotating member 20 may move along the arcuate rail 152 driven by the drive mechanism 50, thereby enabling the rotating member 20 to rotate around the central axis of the arcuate rail 152. In the embodiments, the first axis A1 is the central axis of the arcuate rail 152.

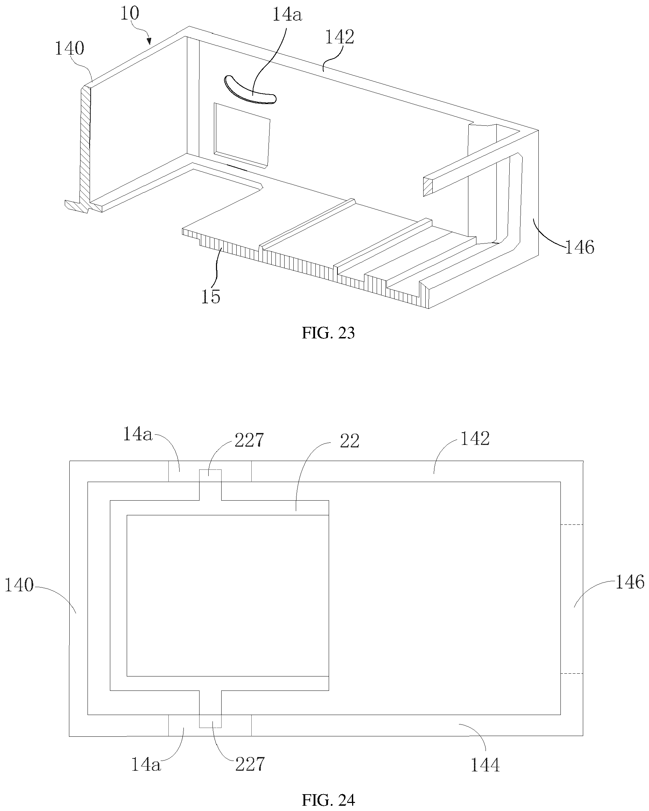

As shown in FIGs. 23 and 24, in some embodiments, the guide rail may also be an arcuate recess 14a defined on the second side wall 142 and the third side wall 144 of the fixing member 10. The second side wall 222 and the third side wall 223 of the base 22 of the embodiments are arranged with a slider 227. The slider 227 is mounted in the arcuate recess 14a and may be driven to move along the arcuate recess 14a by the drive mechanism 50, such that the rotating member 20 may rotate around the central axis of the arcuate recess 14a. In the embodiments, the first axis A1 is the central axis of the arcuate recess 14a.

It should be noted that the central axis of the arcuate rail 152 and that of the arcuate recess 14a in the above embodiments may be inside or outside the fixing member 10.

It should be further noted, referring together to FIGs. 6, 8, 25, and 26, that the lens assembly 70 is movably disposed within a capacitive space defined by the fixing member 10, and is disposed on a side of the light emitting surface 244 of the light redirecting member 24 to receive and transmit light redirected by the light redirecting member 24. Since the lens assembly 70 may move within the capacitive space defined by the fixing member 10, the lens assembly 70 is capable of adjusting a distance between the lens assembly 70 and the light emitting surface 244 of the light redirecting member 24, thereby enabling a focusing or zooming of the first camera module 100.

Specifically, the lens assembly 70 may include a moving member 72, a lens unit 74, and a third drive mechanism 76. The lens unit 74 may be fixed to the moving member 72, and an optical axis of the lens unit 74 is the optical axis A3 of the lens assembly 70 described above. The third drive mechanism 76 connects the fixing member 10 and the moving member 72. The third drive mechanism 76 is configured to drive the moving member 72 in a direction of the optical axis of the lens unit 74.

In some embodiments, the lens unit 74 may include a plurality of lenses 740 arranged side by side. Optical axes of the plurality of lenses 740 may all disposed in a same line and act as the optical axis of the lens unit 74.

The moving member 72 may have a substantially cylindrical shape, as shown in FIG. 8. The plurality of lenses 740 may be spaced in the moving member 72 along a moving direction of the moving member 72 (i.e., the direction of the optical axis A3 of the lens unit 70) by means of an adhesion or the like. The shape of the moving member 72 is not limited to the cylindrical shape, but may also be other regular or irregular shapes such as a rectangular cavity, as long as the lens 740 may be accommodated therein and act as a fixation for the lens 740. In this way, the moving member 72 is capable of carrying, fixing and securing the plurality of lenses 740.

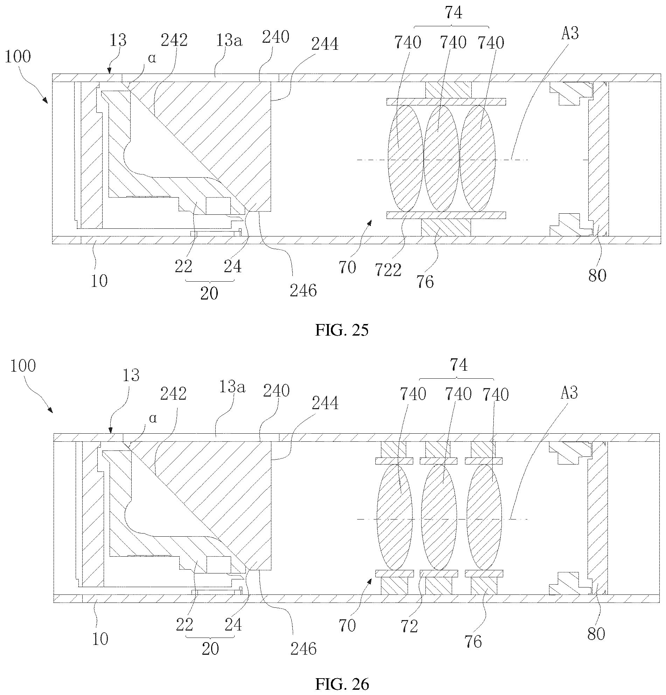

As shown in FIG. 25, in some embodiments, the moving member 72 may also include two clips 722, both of which may extend in a direction parallel to the optical axis A3 of the lens assembly 70. The plurality of lenses 740 are sandwiched between the two clips 722 and spaced along the moving direction of the moving member 72. A number of the clips 722 is not limited to two, but may be three, four, etc., according to actual requirements, to make the fixation of the lens 740 by the moving member 72 more stable. The specific number is not limited herein. It should be noted that the clip 722 further reduces a weight of the moving member 72, thereby reducing a power required to drive the moving member 72 by the third drive mechanism 76. Moreover, the clip-shaped moving element 72 is less difficult to produce, thereby reducing a production cost of the first camera module 100.

The third drive mechanism 76 is similar to the first drive mechanism 52 and the second drive mechanism 54 described above, and may be one or more of an electromagnetic drive mechanism, a piezoelectric drive mechanism, or a memory alloy drive mechanism, and the like. Specifically, the third drive mechanism 76 includes a coil (not shown) disposed on the first side wall 140 of the fixing member 10 and a magnet (not shown) disposed on the moving member 72. In this way, when the coil is energized, the magnet undergo a movement to drive the moving member 72 to move the lens unit 74 along the optical axis A3 of the lens assembly 70.

It should be noted that in the embodiments, the number of lens unit 74, the moving member 72, and the third drive mechanism 76 are all one. The third drive mechanism 76 may drive the moving member 72 to simultaneously move all of the lenses 740 in the lens units 74 in the direction of the optical axis A3 of the lens assembly 70, thereby enabling the focusing of the first camera module 100.

In some embodiments, as shown in FIG. 26, the number of lens units 74, moving members 72, and third drive mechanisms 76 may each be multiple. Each lens unit 74 includes the lens 740, and is fixedly connected to the moving member 72. Each third drive mechanism 76 is connected to the moving member 72 to drive the moving member 72 independently. One or more third drive mechanisms 76 may be controlled as required to drive corresponding one or more moving members 72, thereby driving the one or more corresponding lens units 74 to move to change the overall focal length of the lens assembly 70 and thus achieve the zoom function of the first camera module 100.

Further, the image sensor 80 is arranged on a side of the lens assembly 70 away from the rotating member 20 to receive and sense the light transmitted through the lens assembly 70. Specifically, the image sensor 80 may be employed with a complementary metal oxide semiconductor (CMOS) sensor element or a charge-coupled device (CCD) sensor element.

As shown in FIGs. 5 and 27 to 28, the second camera module 300 may include a shell 302 and an imaging assembly 304 disposed within the shell 302. The shell 302 is defined with an incident hole 302a corresponding to the imaging assembly 304, such that the external light may enter the second camera module 300 through the incident hole 302a.

Further, a side of the decorating member 700 surrounds an outer circumference of the light inlet 13a of the first camera module 100, and the other side may protrude from a surface of the rear cover 204 to improve an appearance of the camera module 600 by setting the shape, color, etc. of the decorating member 700 to act as a decorating role. The decorating member 700 may be made of plastic, ceramic, metal, alloy, or a composite material of metal and ceramic, such as stainless steel, aluminum alloy, and the like, and further may be polished to form a glossy surface to make the decorating member 700 more aesthetically pleasing.

Specifically, the decorating member 700 may include a main body portion 702 and a convex edge 704 that are connected to the main body portion 702.

The main body portion 702 is defined with a first through hole 702a and a second through hole 702b that are spaced side by side. The first through hole 702a corresponds to the light inlet 13a of the first camera module 100, and the second through hole 702b corresponds to the incident hole 302a of the second camera module 300, such that the first camera module 100 and the second camera module 300 may collect external light through the corresponding through hole, respectively. Specifically, the first through hole 702a may be a substantially square hole and the second through hole 702b may be a substantially round hole.

Of course, the structure of the main body portion 702 is not limited to the above description. For example, the first through hole 702a and the second through hole 702b may also be a connected through hole through which the first camera module 100 and the second camera module 300 both capture and collect external light. Moreover, the first through hole 702a and the second through hole 702b may be of other shapes, such as both may be square or round. Configurations shall depend on the actual needs and the shape of the light inlet 13a of the first camera module 100 and the incident hole 302a of the second camera module 300.

Further, the convex edge 704 is connected and arranged on a side of the main body portion 702 facing an interior of the mobile phone, and extending in a direction away from the first through hole 702a and the second through hole 702b. The groove 13b of the fixing member 10 matches the shape of a side of the convex edge 704 near the light inlet 13a, such that the decorating member 700 is fixed to the fixing member 10 by accommodating a part of the structure of the convex edge 704. In this way, the decorating member 700 is able to partially snap into the recess 13b in the direction of the first axis A1 to reduce the size of the camera assembly 600 in this direction, making the structure more compact and facilitating the miniaturization of the camera assembly 600 and the electronic device. It should be noted that the embodiments do not limit the specific structure and shape of the recess 13b, as long as the recess 13b can be matched with the decorating member 700 to reduce the size of the camera assembly 600 in the direction of the first axis A1.

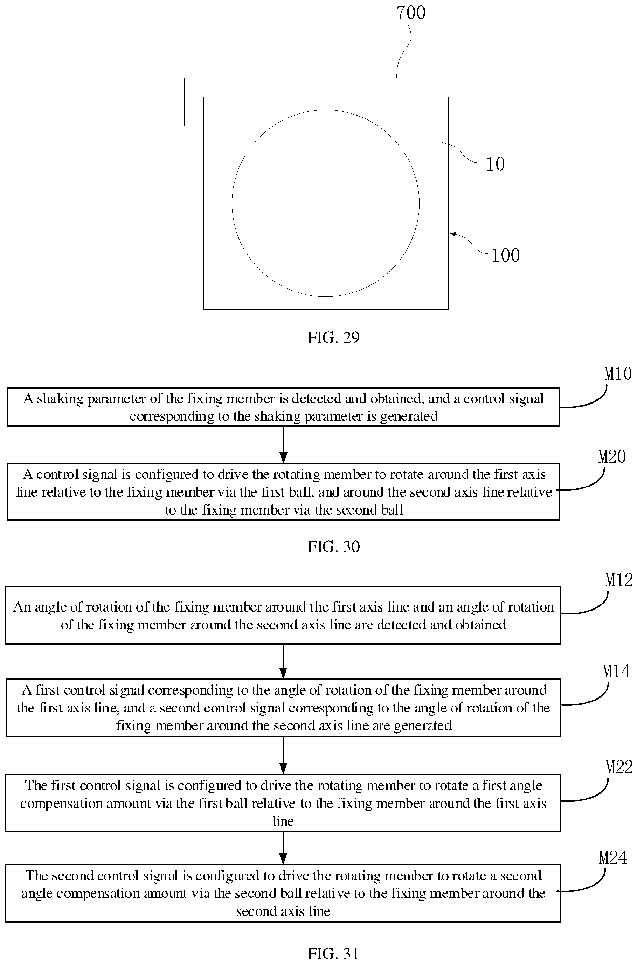

Further, as shown in FIG. 29, in the related art, the recess 13b for accommodating part of the structure of the decorating member 700 may be omitted on the fixing member 10 to make the overall thickness of the electronic device smaller. The fixing member 10 extends at least partially into the decorating member 700 in the direction of the second axis A2 (as shown in FIG. 7), such that the decorating member 700 may cover a periphery of the fixing member 10 in the direction of the second axis A2. Since the first camera module 100 is a periscopic camera module, and a width of the first camera module 100 in the direction of the second axis A2 is larger than that of vertical imaging modules, the decorating member 700 is required to be configured with a larger size, which is detrimental to the aesthetics of the electronic device as well as to the thinness and miniaturization of the same.

The decorating member 700 may be an integrated structure formed by cutting, etc. The main body portion 702 and the convex edge 704 are two parts of the decorating member 700, respectively. Of course, the main body portion 702 and the convex edge 704 may also be a split structure, i.e., the main body portion 702 and the convex edge 704 are two independent components, which are assembled together by welding, adhesion, etc., to form the decorating member 700, which is not specifically limited herein.

Further, as shown in FIGs. 2 and 3, the rear cover 204 of the mobile phone is defined with a light-transmitting hole 204a corresponding to the camera assembly 600. A side of the convex edge 704 is fixed to the fixing member 10 and the other side is abutted against an inner surface of the rear cover 204 around the light-transmitting hole 204a. The main body portion 702 is inserted into the light-transmitting hole 204a, or further extends out from the light-transmitting hole 204a. In this way, the convex edge 704 may serve as a restriction on the position of the decorating member 700, such that the decorating member 700 may not move out of the housing 200. In addition, the decorating member 700 may be further fixed to the rear cover 204 by applying adhesive between the decorating member 700 and the rear cover 204, or the decorating member 700 may also be firmly fixed to the rear cover 204 by the interference fit between the main body portion 702 and the light-transmitting hole 204a.

It should be noted that the convex edge 704 is not a necessary structure. In some embodiments, the decorating member 700 includes only the above-mentioned main body portion 702. A side of the main body portion 702 is accommodated in the groove 13b of the fixing member 10 and fixed to the fixing member 10. The other side is inserted in the light-transmitting hole 204a of the rear cover 204 of the mobile phone, or extends further out of the light-transmitting hole 204a.

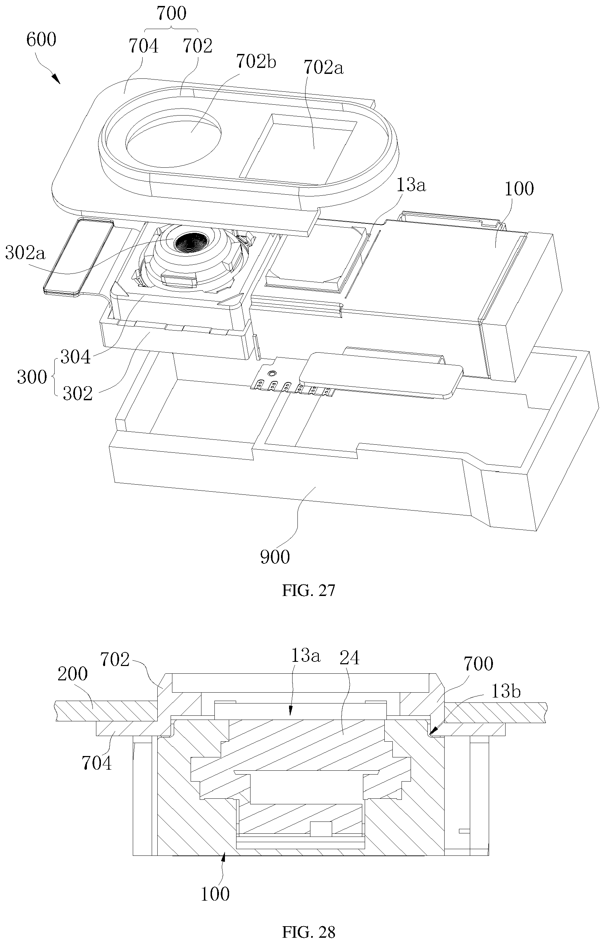

As shown in FIGs. 5 and 27, the bracket 900 is disposed at a periphery of the first camera module 100 and that of the second camera module 300, and is fixedly connected to the first camera module 100 and the second camera module 300. The decorating member 700 is disposed on a side of the bracket 900 and abutted against the same such that the convex edge 704 of the decorating member 700 may cover an edge of a side of the bracket 900 facing the decorating member 700. Or, the bracket 900 may also be spaced apart from the decorating member 700. In this way, the bracket 900 may protect the first camera module 100 and the second camera module 300 to reduce an impact on the first camera module 100 and the second camera module 300, thereby increasing a service life of both.

Further, as shown in FIGs. 30 to 36, the present disclosure also provides a shooting method embodiment. In the embodiments, the camera may be configured as the first camera module 100 in the above-mentioned electronic device, of which the related structure is described above and will not be repeated herein. Specifically, the shooting method may include operations at blocks illustrated in FIG. 30.

At block M10: A shaking parameter of the fixing member 10 is detected and obtained, and a control signal corresponding to the shaking parameter is generated; and

At block M20: A control signal is configured to drive the rotating member 20 to rotate around the first axis A1 relative to the fixing member 10 via the first ball 32, and around the second axis A2 relative to the fixing member 10 via the second ball 34.

A gyroscope or an accelerometer, etc. may be installed. During the process of shooting by the first camera module 100, a shaking of the fixing member 10 may be monitored, analyzed and processed to obtain the shaking parameter.

Specifically, the shaking parameter may be a displacement of the fixing member 10 in a certain direction or a rotation angle around a certain axis during the shooting process. For example, the shaking parameter may be a rotation angle of the fixing member 10 around the first axis A1, a rotation angle around the second axis A2, or other parameters. The first axis A1 and the second axis A2 may be configured perpendicular to each other.

The control signal is derived from an analysis of the shaking parameter and corresponds to an action to be performed by the rotating member 20. To a certain extent, the control signal is "opposite" to the shaking parameter, such that the rotating member 20 may rotate in an opposite direction of the shaking of the fixing member 10 to compensate for an incidence deviation of the incident light entering through the light inlet 13a due to the shaking of the fixing member 10, and to avoid or reduce the adverse effect on the imaging caused by the shaking of the mobile phone.

Further, block M10 may include operations at blocks illustrated in FIG. 31.

At block M12: An angle of rotation of the fixing member 10 around the first axis A1 and an angle of rotation of the fixing member 10 around the second axis A2 are detected and obtained; and

At block M14: A first control signal corresponding to the angle of rotation of the fixing member 10 around the first axis A1, and a second control signal corresponding to the angle of rotation of the fixing member 10 around the second axis A2 are generated.

Accordingly, block M20 may include operations as followed.

At block M22: The first control signal is configured to drive the rotating member 20 to rotate a first angle compensation amount via the first ball 32 relative to the fixing member 10 around the first axis A1; and

At block M24: The second control signal is configured to drive the rotating member 20 to rotate a second angle compensation amount via the second ball 34 relative to the fixing member 10 around the second axis A2.

The angular compensation amount of the rotating member 20 is opposite to the shaking parameter of the fixing member 10. Specifically, when the fixing member 10 rotates a first angle in a clockwise direction around the first axis A1, then the first angle compensation amount is the first angle of rotation of the rotating member 20 around the first axis A1 in a counterclockwise direction. Similarly, when the fixing member 10 rotates the second angle in a clockwise direction around the second axis A2, then the second angle compensation amount is the second angle of rotation of the rotating member 20 around the second axis A2 in a counterclockwise direction. It should be understood that the terms of "clockwise" and "counterclockwise" are not to be construed as a limitation of the present disclosure.

In practice, there may be cases where the first and/or second control signals are empty. For example, in cases of the angle of rotation of the fixing member 10 around the first axis A1 is detected to be zero, the fixing member 10 is determined not to rotate around the first axis A1, and the rotating member 20 is not required to rotate around the first axis A1 for compensating. The corresponding first control signal is null, i.e., the rotating member 20 is not required to be controlled to rotate around the first axis A1. Of course, in cases where the angle of rotation of the fixing member 10 around the first axis A1 and the angle of rotation around the second axis A2 are detected to be zero, the first control signal and the second control signal are both empty, such that the rotating member 20 is not required to be controlled to rotate around the first axis A1 and the second axis A2.

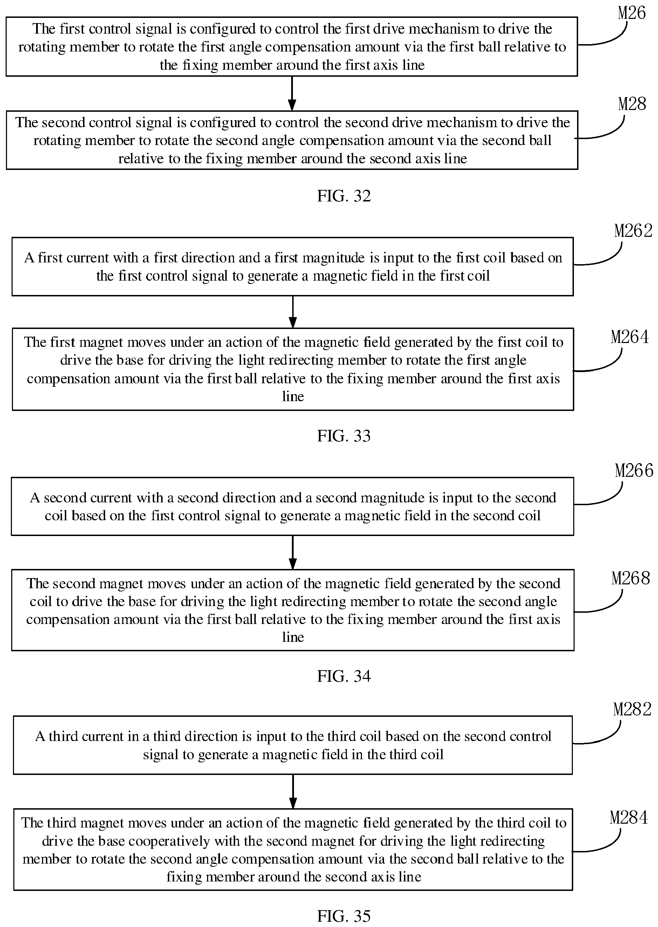

Further, the first camera module 100 includes the first drive mechanism 52 and the second drive mechanism 54. Both the first drive mechanism 52 and the second drive mechanism 54 are connected to the base 22. Block M20 may include operations at blocks illustrated in FIG. 32.

At block M26: The first control signal is configured to control the first drive mechanism 52 to drive the rotating member 20 to rotate the first angle compensation amount via the first ball 32 relative to the fixing member 10 around the first axis A1; and

At block M28: The second control signal is configured to control the second drive mechanism 54 to drive the rotating member 20 to rotate the second angle compensation amount via the second ball 34 relative to the fixing member 10 around the second axis A2.

Specifically, the first drive mechanism 52 may include the first coil 522 and the first magnet 520. Block M26 may include operations at blocks illustrated in FIG. 33.

At block M262: A first current with a first direction and a first magnitude is input to the first coil 522 based on the first control signal to generate a magnetic field in the first coil 522; and

At block M264: The first magnet 520 moves under an action of the magnetic field generated by the first coil 522 to drive the base 22 for driving the light redirecting member 24 to rotate the first angle compensation amount via the first ball 32 relative to the fixing member 10 around the first axis A1.

According to electromagnetic induction, directions as well as the magnitudes of the current input in the first coil 522 affects the rotation of the first magnet 520 therein. Specifically, the first direction of the first current determines the moving direction of the first magnet 520, and thus the rotating direction of the rotating member 20 around the first axis A1. The first magnitude of the first current affects the angle of rotation of the first magnet 520 around the first axis A1. Therefore, the first direction and the first magnitude of the first current through the first coil 522 are required to be determined based on the first control signal to control the direction and angle of rotation of the rotating member 20 around the first axis A1.

Specifically, the first drive mechanism 52 may also include the second coil 526 and the second magnet 524. Block M26 may include operations at blocks illustrated in FIG. 34.

At block M266: A second current with a second direction and a second magnitude is input to the second coil 526 based on the first control signal to generate a magnetic field in the second coil 526; and

At block M268: The second magnet 524 moves under an action of the magnetic field generated by the second coil 526 to drive the base 22 for driving the light redirecting member 24 to rotate the second angle compensation amount via the first ball 32 relative to the fixing member 10 around the first axis A1.

The current input to the second coil 526 based on the first control signal to drive the second magnet 524 herein is similar to the first coil 522 and the first magnet 520 described above and will not be repeated herein.

It should be noted that the first control signal may control only one pair of the first coil 522 and the first magnet 520, and the second coil 526 and the second magnet 524, to drive the base 22 to rotate. Or, the first control signal may also control the above two pairs of driving base 22 to rotate cooperatively at the same time, which can be configured according to actual needs and is not limited herein.

The second drive mechanism 54 may include the third coil 542 and the third magnet 540. Block M28 may include operations at blocks illustrated in FIG. 35.

At block M282: A third current with a third direction and a third magnitude is input to the third coil 542 based on the second control signal to generate a magnetic field in the third coil 542; and

At block M284: The third magnet 540 moves under an action of the magnetic field generated by the third coil 542 to drive the base 22 cooperatively with the second magnet 524 for driving the light redirecting member 24 to rotate the second angle compensation amount via the second ball 34 relative to the fixing member 10 around the second axis A2.

The current input to the third coil 542 based on the second control signal to drive the second magnet 524 is similar to the first coil 522 and the first magnet 520 described above and will not be repeated herein.

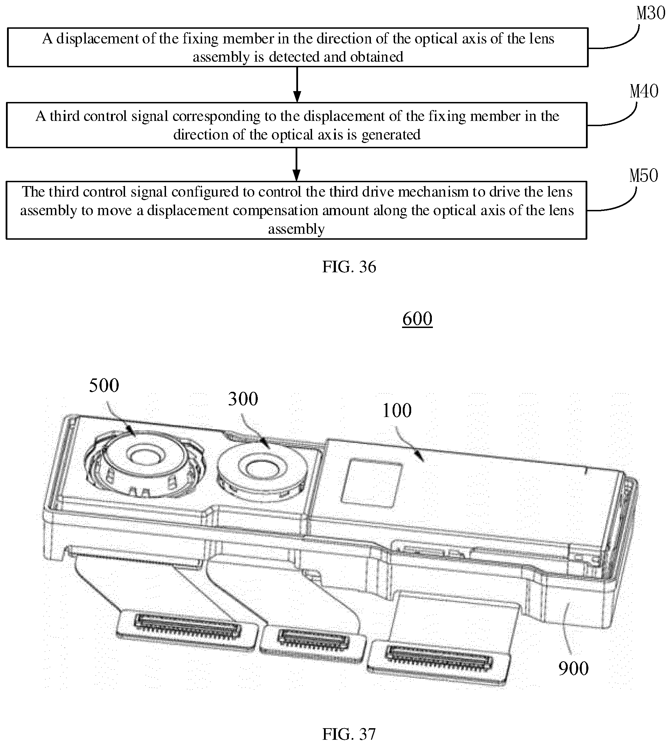

It can be understood that the first camera module 100 also includes the lens assembly 70 and the third drive mechanism 76. The lens assembly 70 is movably connected to the fixing member 10 under the drive of the third drive mechanism 76 for transmitting light redirected by the light redirecting member 24. Specifically, the lens assembly 70 is movably disposed along the direction of the optical axis A3 of the lens assembly 70. The optical axis A3 of the lens assembly 70 is perpendicular to the first axis A1 and the second axis A2. The above shooting method may also include operations at blocks illustrated in FIG. 36.

At block M30: A displacement of the fixing member 10 in the direction of the optical axis A3 of the lens assembly 70 is detected and obtained;

At block M40: A third control signal corresponding to the displacement of the fixing member 10 in the direction of the optical axis A3 is generated; and

At block M50: The third control signal configured to control the third drive mechanism 76 to drive the lens assembly 70 to move a displacement compensation amount along the optical axis A3 of the lens assembly 70.

Similar to the above-mentioned embodiments, the displacement of the fixing member 10 in the direction of the optical axis A3 of the lens assembly 70 may also be detected by a gyroscope or an accelerometer or the like.

The displacement compensation amount is opposite to the detected displacement of the fixing member 10 in the direction of the optical axis A3 of the lens assembly 70. For example, after the fixing member 10 is detected to have performed a displacement in a B direction along the optical axis A3, the third control signal may be configured to control the third drive mechanism 76 to drive the lens assembly 70 to move an equal displacement in a direction opposite to the B direction along the optical axis A3, thereby compensating for the incidence deviation of the incident light entering from the light inlet 13a due to the movement of the fixing member 10 in the direction of the optical axis A3 of the lens assembly 70.

In the embodiments, during the process of taking pictures, the rotation of the fixing member 10 around the first axis A1, the rotation of the fixing member 10 around the second axis A2, or the movement of the fixing member 10 in the direction of the optical axis A3 of the lens assembly 70 may be detected to drive the base 22 for driving the optical redirecting member 24 to make a corresponding compensation movement. In this way, the incidence deviation of the incident light entering from the light inlet 13a due to the shaking of the fixing member 10 may be compensated, and thus avoid or reduce the deviation of the incident light that adversely affects the image quality of the camera.

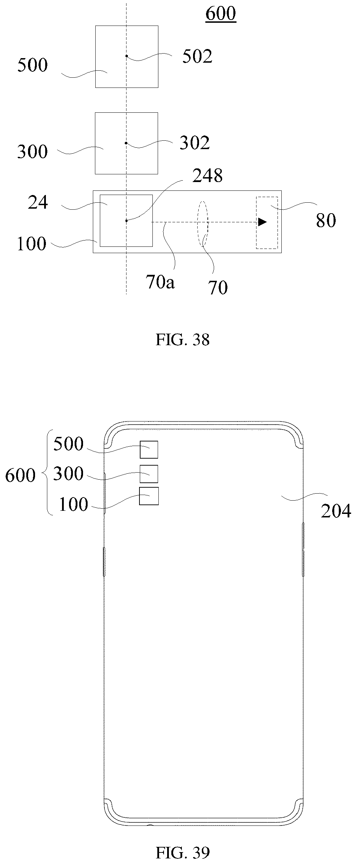

As shown in FIG. 37, FIG. 37 is a structural schematic view of a camera component 600 according to a first embodiment of the present disclosure. The camera assembly 600 further includes a third camera module 500. Specifically, the first camera module 100, the second camera module 300, and the third camera module 500 are arranged side by side. Further, in some embodiments, the first camera module 100, the second camera module 300, and the third camera module 500 may be spaced apart, and two adjacent camera modules may also be abutted against each other. In other embodiments, the first camera module 100, the second camera module 300, and the third camera module 500 are an integrated module. In some embodiments, a shape formed by the three camera modules is either substantially monolithic, as shown in FIG. 37, or substantially L-shaped, as shown in FIG. 38, which will be explained below by specific embodiments referring to the accompanying drawings.

In some embodiments, the first camera module 100 is a periscopic telephoto camera, the second camera module 300 is a large wide-angle camera, and the third camera module 500 is a wide-angle main camera. Specifically, an angle of view of the periscopic telephoto camera is in the range of 10 to 30 degrees, i.e., the first camera module 100 has a small angle of view. Therefore, the first camera module 100 has a large focal length, which is generally applied for filming a distant scene to obtain a clear image of the distant scene. The focal length is larger in cases of distant shooting. Compared to the vertical lens module, the first camera module 100 of the present disclosure is arranged with the periscopic lens module of a smaller height, thereby reducing the overall thickness of the camera module 600. The vertical lens module refers to the lens module having a straight optical axis, or to say, the incident light is conducted along a direction of a straight optical axis to photoreceptors of the camera module.

Specifically, the large wide-angle camera, i.e., the second camera module 300, has an extra-large wide-angle of view in the range of 110 to 130 degrees for wide-angle shooting, such that the optical zoom magnification may be increased. The second camera module 300 has a larger angle of view and a shorter focal length correspondingly, such that the second camera module 300 is generally applied for close-up shooting to obtain local close-up images of objects.

The wide-angle main camera, i.e., the third camera module 500, has a normal angle of view in the range of 80 to 110 degrees. The wide-angle main camera may have large number of pixels and large pixels, and is not applied for distant or close-up scenes, but for normal shooting of objects.

The present disclosure may obtain image effects such as background blurring, local sharpening of pictures, etc. by a combination of the first camera module 100, the second camera module 300, and the third camera module 500.

Specifically, in some embodiments, for example, the angle of view of the first camera module 100 may be 10 degrees, 12 degrees, 15 degrees, 20 degrees, 26 degrees, or 30 degrees, and so on. The angle of view of the second camera module 300 may be 110 degrees, 112 degrees, 118 degrees, 120 degrees, 125 degrees, or 130 degrees, and so on. The angle of view of the third camera module 500 may be 80 degrees, 85 degrees, 90 degrees, 100 degrees, 105 degrees, or 110 degrees, and so on.

As described above, due to the factor of angle of view of the first camera module 100 and the third camera module 500, the first camera module 100 and the third camera module 500 are arranged with an optical stabilization device to enable the first camera module 100 and the third camera module 500 to obtain a better quality image. The optical stabilization device is generally configured with one or more magnetic elements, such as the first magnet and the second magnet described above, and will not be repeated herein. Therefore, the magnetic elements on the first camera module 100 and the third camera module 500 generate magnetic fields for each other. Understandably, if the first camera module 100 and the third camera module 500 are too close together, the magnetic force generated between the magnet on the first camera module 100 and the magnetic element on the third camera module 500 may inevitably have an impact on the focusing process of the first camera module 100 or the third camera module 500 taking pictures, affecting the image quality. In some embodiments, since the large wide-angle camera (i.e., the second camera module 300) has functions of autofocus (AF) or fixed-focus (FF), the second camera module 300 is arranged between the first camera module 100 and the third camera module 500, i.e., between the periscope telephoto camera and the wide-angle main camera. In this way, an overall space formed by the three camera modules may be reduced, and an interference of the magnetic components between the first camera module 100 and the third camera module 500 may be limited.

As shown in FIGs. 38 and 39, FIG. 38 is a structural schematic view of a camera component 600 according to a second embodiment of the present disclosure, and FIG. 39 is a structural schematic view of an electronic device according to a first embodiment of the present disclosure. In some embodiments, the light redirecting member 24 has a first center point 248, the second camera module 300 has a second center point 302, and the third camera module 500 has a third center point 502. The first center point 248, the second center point 302 and the third center point 502 are in a straight line and perpendicular to the optical axis A3 of the lens assembly 70. It should be understood that the first center point 248, the second center point 302 and the third center point 502 being in a straight line means that front projection points of the first center point 248, the second center point 302, and the third center point 502 on the rear cover 204 are in a straight line. That is, when light is directed from the front of the mobile phone to the rear cover 204 and perpendicular to the rear cover 204, the projection points of the first center point 248, the second center point 302, and the third center point 502 are located on the rear cover 204 in a straight line.

Specifically, when the first center point 248, the second center point 302 and the third center point 502 are in a straight line and perpendicular to the optical axis A3 of the lens assembly 70, the length of the first camera module 100 along the optical axis A3 of the lens assembly 70 is larger than the length of the second camera module 300, as shown in FIG. 38. That is, the length of the front projection of the first camera module 100 on the rear cover 204 is larger than the length of the front projection of the second camera module 300 and the third camera module 500 on the rear cover 204. The first camera module 100 is a telephoto periscope camera including the light redirecting member 24, the lens assembly 70, and the image sensor 80. The light path formed by the light redirecting member 24, the lens assembly 70, and the image sensor 80 is not a straight line and required to be redirected for transmission. A certain distance is required to be configured between the three. While the optical path formed by the second camera module 300 or the third camera module 500 during the shooting process is a straight line. In this way, the length of the first lens module 100 is larger than either the second camera module 300 or the third camera module 500.

In some embodiments, the second camera module 300 and the third camera module 500 have equal lengths along the optical axis A3 of the lens assembly 70. It should be understood that the three camera modules are arranged in such a structure with an L-shaped configuration in appearance, such that a more aesthetically pleasing integration formed by the three camera modules may be achieved.

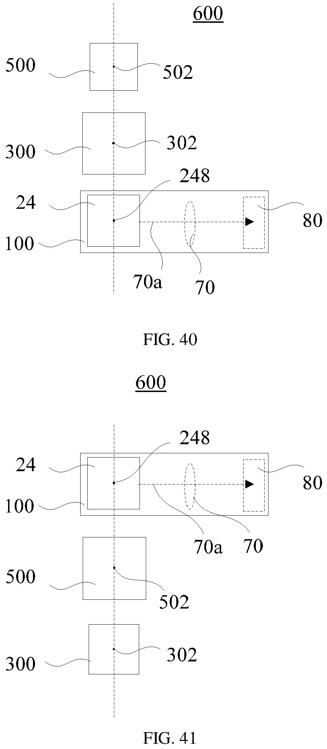

In some embodiments, the second camera module 300 and the third camera module 500 have unequal lengths along the optical axis A3 of the lens assembly 70. For example, the lengths of the three camera modules may increase progressively along the optical axis A3 of the lens assembly 70, as shown in FIG. 40; or decrease progressively, as shown in FIG. 41, which is not specifically limited herein.

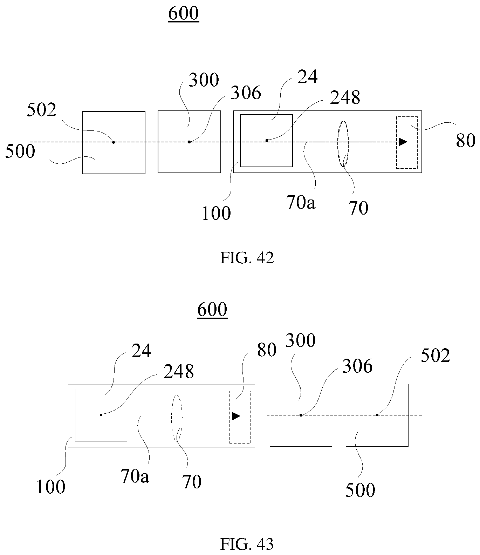

In some embodiments, the first center point 248, the second center point 302 and the third center point 502 are in a straight line and parallel to the optical axis A3 of the lens assembly 70. That is, the three camera modules are disposed in a line in appearance, as shown in FIGs. 37 and 42. It should be understood that in embodiments in which the three camera modules are disposed in a line and the second camera module 300 is disposed between the first camera module 100 and the third camera module 500, the light redirecting member 24 may be closer to the third camera module 500 relative to the lens assembly 70 in some embodiments. In another embodiments, the lens assembly 70 may also be closer to the third camera module 500 relative to the light redirecting member 24, as shown in FIG. 43, which is not specifically limited herein.

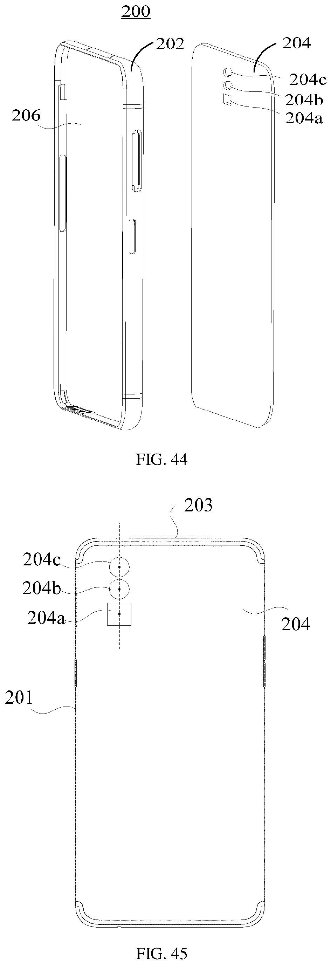

As shown in FIG. 44 and FIG. 45, wherein FIG. 44 is a structural schematic view of a housing 200 according to an embodiment of the present disclosure, and FIG. 45 is a structural schematic view of an electronic device according to a second embodiment of the present disclosure. The following describes the position and connection relationship between the three camera modules and the housing 200. In some embodiments, the housing 200 is defined with three openings. Center points of the three openings are disposed in a straight line. Specifically, the three openings are arranged on the rear cover 204 of the housing 200, including a first opening 204a, a second opening 204b, and a third opening 204c. A connecting rib is formed between the first opening 204a, second opening 204b, and third opening 204c, i.e., the three openings on the rear cover 204 are spaced apart. Further, the first camera module 100 is installed correspondingly at the first opening 204a, the second camera module 300 is installed correspondingly at the second opening 204b, and the third camera module 500 is installed correspondingly at the third opening 204c. Specifically, the light redirecting member 24 of the first camera module 100 is facing the first opening 204a for receiving light. The front projection of the light redirecting member 24 falls on the first opening 204a. It is understood that the front projection of the light redirecting member 24 described herein is a projection produced by the light redirecting member 24 when light is shone from the front of the mobile phone in a direction toward the rear cover 204.

Specifically, the housing 200 is arranged with a capacitive cavity 206, i.e., the front case 202 and the rear cover 204 of the housing 200 are enclosed to define the capacitance cavity 206. The capacitance cavity 206 is interconnected with the first opening 204a, the second opening 204b, and the third opening 204c on the rear cover 204. Specifically, the first camera module 100, the second camera module 300, and the third camera module 500 are installed within the capacitive cavity 206. The three camera modules receive incident light through the first opening 204a, the second opening 204b, and the third opening 204c, respectively.

Alternatively, in some embodiments, an area of the first opening 204a is larger than that of the second opening 204b and the third opening 204c. Further, in other embodiments, the area of the second opening 204b and that of the third opening 204c are equal. In other embodiments, the areas of all three openings are equal, or in a progressively increasing or decreasing relationship, which is not specifically limited herein. It should be understood that the first opening 204a is only communicated to the light redirecting member 24. The lens assembly 70 and the image sensor 80 are obscured by the housing 200, i.e., by the rear cover 204 of the housing 200. Therefore, only the first opening 204a, the second opening 204b, and the third opening 204c are visible from the back of the mobile phone, and the lens assembly 70 and the image sensor 80 are not visible.

In some embodiments, as shown in FIG. 45, the first opening 204a may have a substantially quadrilateral shape, and the second opening 204b and the third opening 204c may be substantially circular, such that a more aesthetically pleasing appearance to the electronic device employing the camera assembly 600 may be achieved. In other embodiments, the three openings may also be of a same shape, or of a shape other than circular and quadrilateral, which is not specifically limited herein.

Further, the housing 200 includes two opposite and parallel-arranged first edges 201 and two opposite and parallel-arranged second edges 203, the first edge 201 and the second edge 203 being connected at the beginning and end. In some embodiments, an outer contour of the rear cover 204 includes a first edge 201 and a second edge 203 connected to the first edge 201. In some embodiments, the first edge 201 and the second edge 203 are disposed perpendicularly, and the first edge 201 and the second edge 203 are connected at a right angle. In some embodiments, the first edge 201 and the second edge 203 are arranged vertically, and the first edge 201 and the second edge 203 are connected by a rounded transition, as shown in FIG. 45, making positions of edges at back of the mobile phone a rounded transition and a better feel in hands.

Specifically, a length of the first edge 201 may be larger than that of the second edge 203. That is, the first edge 201 is a long edge of the rear cover 204 and the second edge 203 is a short edge of the rear cover 204.

Alternatively, in different embodiments, a connecting line of center points of the first opening 204a, the second opening 204b, and the third opening 204c is parallel to the first edge 201 or the second edge 203.

In some embodiments, as shown in FIG. 45, the connecting line of center points of the first opening 204a, the second opening 204b, and the third opening 204c is parallel to the first edge 201. That is, the three camera modules are in a substantially L-shaped structure.

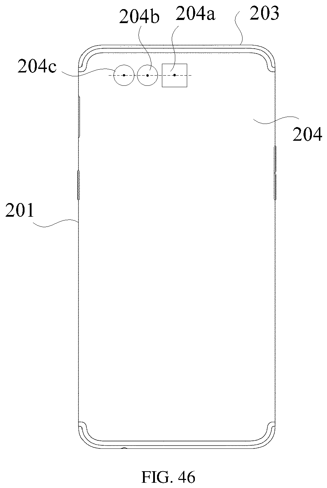

In other embodiments, as shown in FIG. 46, the connecting line of center points of the first opening 204a, the second opening 204b, and the third opening 204c is parallel to the second edge 203. That is, the three camera modules are disposed in a line.

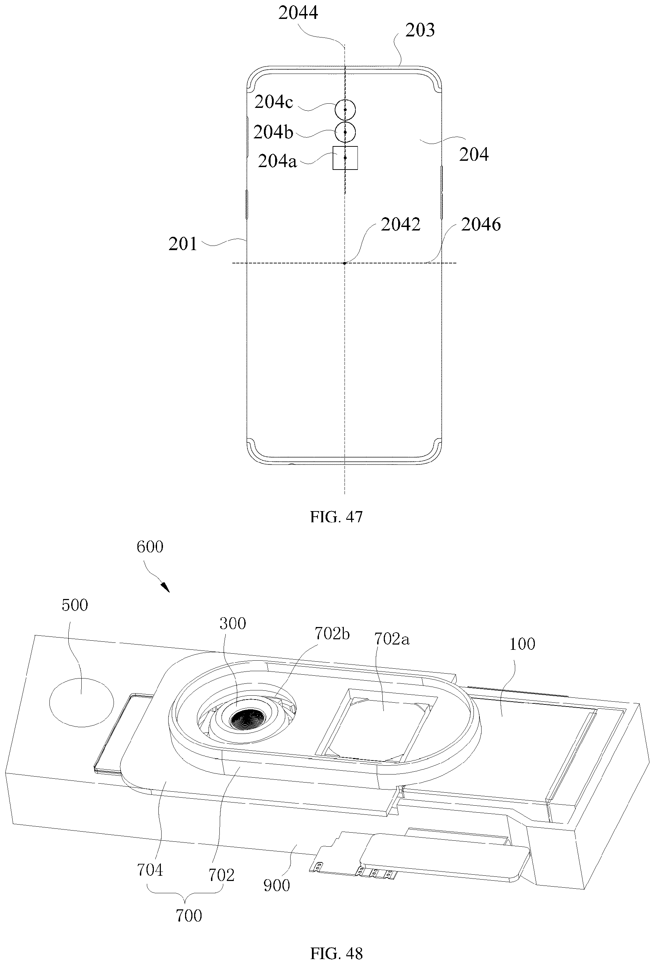

As shown in FIG. 47, specifically, the rear cover 204 includes a rear cover center point 2042, a center line 2044 configured to be a center line passing through the rear cover center point 2042 and parallel to the first edge 201, and a center line 2046 configured to be a center line passing through the rear cover center point 2042 and parallel to the second edge 203. The first opening 204a, the second opening 204b and the third opening 204c are disposed between the second edge 203 and the second center line 2046. That is, the three openings on the rear cover 204 are disposed in an upper half of the mobile phone. Further, in some embodiments, a connecting line of the center points of the first opening 204a, the second opening 204b, and the third opening 204c coincides with the first center line 2044 of the rear cover 204. That is, the first camera assembly 600 is disposed in the middle of the upper half of the mobile phone. It should be understood that the first camera assembly 600 being disposed in the middle of the upper half of the mobile phone facilitates a stacking of the entire structure and achieve a more aesthetically pleasing appearance of the entire mobile phone.

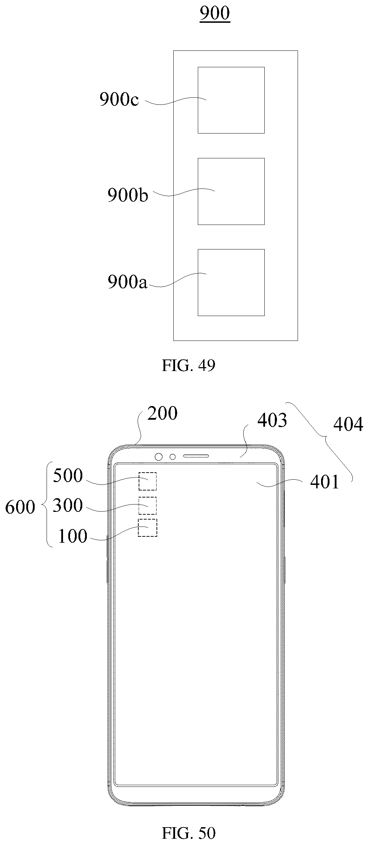

As shown in FIG. 44, FIG. 48, and FIG. 49, FIG. 48 is a structural schematic view of a bracket according to an embodiment of the present disclosure; FIG. 49 is a front-structural schematic view of an electronic device including a bracket 900 according to an embodiment of the present disclosure. Specifically, in some embodiments, the mobile phone in which the camera assembly 600 is applied also includes a bracket 900. The bracket 900 is fixedly connected to the housing 200 and disposed between the front case 202 and the rear cover 204. Three holding slots are defined on the bracket 900, including a first holding slot 900a, a second holding slot 900b, and a third holding slot 900c. The first camera module 100, second camera module 300, and third camera module camera module 500 may be fixed in the first holding slot 900a, the second holding slot 900b, and the third holding slot 900c, respectively. Each holding slot corresponds to a camera module, thereby fixing the first camera module 100, second camera module 300, and third camera module camera module 500 to be integrated through the bracket 900.

Further, the decorating member 700 is disposed above the bracket 900. Specifically, the decorating member 700 may be abutted against the bracket 900, or may be spaced from the bracket 900. The bracket 900 may reduce an impact on the first camera module 100, the second camera module 300, and the third camera module 500, and improve the life of the three.

As shown in FIG. 50, FIG. 50 is a front-structural schematic view of an electronic device according to another embodiment of the present disclosure. The display assembly of the mobile phone includes a display 404 embedded in the front case 202. The display 404 includes a display area 401 and a non-display area 403. The non-display area 403 is arranged around the display area 401. Alternatively, in some embodiments, orthogonal projections of the first camera module 100, the second camera module 300, and the third camera module 500 in a thickness direction of the mobile device are disposed within the display area 401. In other embodiments, a part of the orthogonal projections of the first camera module 100, the second camera module 300, and the third camera module 500 in a thickness direction of the mobile device is disposed within the display area 401, and a part is disposed in the non-display area 403, which is not specifically limited herein.

## Claims

1. A camera module (100), **characterized by** comprising:
a fixing member (10);
a rotating member (20), rotatably connected to the fixing member (10), and comprising:
a base (22); and
a light redirecting member (24), fixed to the base (22), for redirecting an incident light;
a plurality of first balls (32), disposed between the base (22) and the fixing member (10), capable of moving the rotating member (20) around a first axis (A1) relative to the fixing member (10); and
a plurality of second balls (34), disposed between the base (22) and the fixing member (10), capable of moving the rotating member (20) around a second axis (A2) relative to the fixing member (10);
wherein the direction of the first axis (A1) is perpendicular to the direction of the second axis (A2);
wherein centers of the plurality of first balls (32) are located on the first axis (A1), and centers of the plurality of second balls (34) are located on the second axis (A2).

2. The camera module (100) according to claim 1, further comprising: a connecting member (40) disposed between the fixing member (10) and the rotating member (20);
wherein the plurality of first balls (32) are disposed between the rotating member (20) and the connecting member (40), and has a capability of moving the rotating member (20) to rotate around the first axis (A1) relative to the fixing member (10) and the connecting member (40);
the plurality of second balls (34) are disposed between the fixing member (10) and the connecting member (40), and has a capability of moving the connecting member (40) and the rotating member (20) to rotate around the second axis (A2) relative to the fixing member (10).

3. The camera module (100) according to claim 2, wherein the base (22) comprises a first side wall (221) facing the connecting member (40), a first rotation slot (221a) matched to the plurality of first balls (32) is defined on the first side wall (221) of the base (22);
the connecting member (40) comprises a first outer wall surface (42) correspondingly facing the first side wall (221) of the base (22), a second rotation slot (42a) is defined on the first outer wall surface (42) of the connecting member (40) correspondingly facing the first rotation slot (221a) and matched to the plurality of first balls (32);
the plurality of first balls (32) are accommodated in the first rotation slot (221a) and the second rotation slot (42a), a first gap (D1) is defined between the first side wall (221) of the base (22) and the first outer wall surface (42) of the connecting member (40), and the rotating member (20) is capable of being rotated around the first axis (A1) within a range defined by the first gap (D1) by rotating the plurality of first balls (32) in the first rotation slot (221a) and the second rotation slot (42a).

4. The camera module (100) according to claim 3, wherein the connecting member (40) comprises a second outer wall surface (44) opposite to the first outer wall surface (42), a third rotation slot (44a) matched to the plurality of second balls (34) is defined on the second outer wall surface (44) of the connecting member (40);
the fixing member (10) comprises a first side wall (140) facing the second outer wall surface (44) of the connecting member (40), a fourth rotation slot (140a) correspondingly facing the third rotation slot (44a) and matched to the plurality of second balls (34) is defined on the first side wall (140) of the fixing member (10);
the plurality of second balls (34) are accommodated in the third rotation slot (44a) and the fourth rotation slot (140a), a second gap (D2) is defined between the second outer wall surface (44) of the connecting member (40) and the first side wall (140) of the fixing member (10), and the rotating member (20) is capable of being rotated around the second axis (A2) within a range defined by the second gap (D2) by a rotation of the plurality of second balls (34) in the third rotation slot (44a) and the fourth rotation slot (140a).

5. The camera module (100) according to claim 4, further comprising:
a first drive mechanism (52) connected to the base (22), for driving the base (22) to bring the rotating member (20) to rotate around the first axis (A1); and
a second drive mechanism (54) connected to the base (22), for driving the base (22) to bring the rotating member (20) to rotate around the second axis (A2).

6. The camera module (100) according to claim 5, wherein the base (22) further comprises a second side wall (222) disposed on a side of the first side wall (221) of the base (22) and connected to the first side wall (221) of the base (22), the fixing member (10) further comprises a second side wall (142) connected to the first side wall (140) of the fixing member (10) and facing the second side wall (222) of the base (22);
the first drive mechanism (52) comprises:
a first magnet (520), fixed to the second side wall (222) of the base (22); and
a first coil (522), disposed on the second side wall (142) of the fixing member (10) and corresponding to the first magnet (520);
wherein when the first coil (522) is energized, the first magnet (520) undergoes a movement to drive the base (22) to drive the light redirecting member (24) to rotate around the first axis (A1); a first mounting slot (222a) is defined on the second side wall (222) of the base (22), the first magnet (520) is fixed in the first mounting slot (222a) by means of an adhesive.

7. The camera module (100) according to claim 5, wherein the base (22) comprises a third side wall (223) connected to the first side wall (221) of the base (22), the fixing member (10) comprises a third side wall (144) connected to the first side wall (140) of the fixing member (10) and correspondingly facing the third side wall (223) of the base (22);
the first drive mechanism (52) comprises:
a second magnet (524), fixed to the third side wall (223) of the base (22); and
a second coil (526), disposed on the third side wall (144) of the fixing member (10) corresponding to the second magnet (524);
wherein when the second coil (526) is energized, the second magnet (524) undergoes a movement to drive the base (22) to drive the light redirecting member (24) to rotate around the first axis (A1); a second mounting slot (223a) is defined on the third side wall (223) of the base (22), the second magnet (524) is fixed in the second mounting slot (223a) by means of an adhesive.

8. The camera module (100) according to claim 5, wherein the base (22) comprises a bottom wall (224) disposed on a side of the first side wall (221) of the base (22) and connected to the first side wall (221) of the base (22), the fixing member (10) comprises a bottom wall (15) disposed on a side of the first side wall (140) of the fixing member (10), connected to the first side wall (140) of the fixing member (10) and correspondingly facing the bottom wall (224) of the base (22);
the second drive mechanism (54) comprises:
a third magnet (540), fixed to the bottom wall (224) of the base (22); and
a third coil (542), disposed on the bottom wall (15) of the fixing member (10) corresponding to the third magnet (540);
wherein when the third coil (542) is energized, the third magnet (540) undergoes a movement to drive the base (22) to drive the light redirecting member (24) to rotate around the second axis (A2); a third mounting slot (224a) is defined on the bottom wall (224) of the base (22), the third magnet (540) is fixed in the third mounting slot (224a) by means of an adhesive.

9. The camera module (100) according to claim 4, comprising:
a first magnetic member (62), fixed on the first side wall (221) of the base (22); and
a second magnetic member (64), fixed on the first side wall (140) of the fixing member (10);
wherein a polarity of a magnetic pole on a side of the first magnetic member (62) facing the second magnetic member (64) is opposite to a polarity of a magnetic pole on a side of the second magnetic member (64) facing the first magnetic member (62), such that the base (22), the connecting member (40) and the fixing member (10) are positional limited through an attract of opposite polarities.

10. The camera module (100) according to claim 9, wherein the first magnetic member (62) comprises a fourth magnet (620), a fourth mounting slot (221b) matched to the fourth magnet (620) is defined on the first side wall (221) of the base (22), the fourth magnet (620) is fixed in the fourth mounting slot (221b) by means of an adhesive;
the second magnetic member (64) comprises a fifth magnet (640), a fifth mounting slot (140b) matched to the fifth magnet (640) is defined on the first side wall (140) of the fixing member (10), the fifth magnet (640) is fixed in the fifth mounting slot (140b) by means of the adhesive.

11. The camera module (100) according to claim 1, wherein the first axis (A1) and the second axis (A2) are perpendicular to each other; the camera module (100) further comprises a lens assembly (70) movably connected to the fixing member (10), for transmitting a light passing through the light redirecting member (24); wherein an optical axis (A3) of the lens assembly (70) is perpendicular to the first axis (A1) and the second axis (A2).

12. The camera module (100) according to claim 11, wherein the lens assembly (70) comprises:
a moving member (72);
a lens unit (74), fixed to the moving member (72), the optical axis (A3) of the lens assembly (70) being an optical axis of the lens unit (74); and
a third drive mechanism (76), connected to the fixing member (10) and the moving member (72), for driving the moving member (72) along the optical axis of the lens unit (74).

13. The camera module (100) according to claim 1, wherein the light redirecting member (24) is a prism, the prism comprising:
a light incident surface (240);
a light reflecting surface (242), connected to the light incident surface (240) and inclined; and
a light emitting surface (244), connected to the light incident surface (240);
wherein the incident light enters from the light incident surface (240), is redirected by the light reflecting surface (242), and is emitted from the light emitting surface (244).

14. An electronic device, **characterized by** comprising:
a front case (202);
a display (404), embedded in the front case (202);
a rear cover (204), connected to the front case (202);
a first camera module (100) that is the camera module according to any one of claims 1-13 and embedded in the rear cover; and
a second camera module (300), embedded in the rear cover (204) in parallel with the first camera module (100).

## Patentansprüche

1. Kameramodul (100), **dadurch gekennzeichnet, dass** es Folgendes umfasst:
ein Befestigungselement (10);
ein drehendes Element (20), das drehbar mit dem Befestigungselement (10) verbunden ist und Folgendes umfasst:
eine Basis (22); und
ein Lichtumlenkungselement (24), das an der Basis (22) zum Umlenken eines einfallenden Lichts befestigt ist;
eine Mehrzahl von ersten Kugeln (32), die zwischen der Basis (22) und dem Befestigungselement (10) angeordnet sind, die dazu fähig sind, das drehende Element (20) um eine erste Achse (A1) relativ zu dem Befestigungselement (10) zu bewegen; und
eine Mehrzahl von zweiten Kugeln (34), die zwischen der Basis (22) und dem Befestigungselement (10) angeordnet sind, die dazu fähig sind, das drehende Element (20) um eine zweite Achse (A2) relativ zu dem Befestigungselement (10) zu bewegen;
wobei die Richtung der ersten Achse (A1) senkrecht zu der Richtung der zweiten Achse (A2) ist;
wobei Mittelpunkte der Mehrzahl von ersten Kugeln (32) auf der ersten Achse (A1) angeordnet sind und Mittelpunkte der Mehrzahl von zweiten Kugeln (34) auf der zweiten Achse (A2) angeordnet sind.

2. Kameramodul (100) nach Anspruch 1, ferner umfassend: ein Verbindungselement (40), das zwischen dem Befestigungselement (10) und dem drehenden Element (20) angeordnet ist;
wobei die Mehrzahl von ersten Kugeln (32) zwischen dem drehenden Element (20) und dem Verbindungselement (40) angeordnet ist und eine Fähigkeit aufweist, das drehende Element (20) so zu bewegen, dass es sich relativ zu dem Befestigungselement (10) und dem Verbindungselement (40) um die erste Achse (A1) dreht;
wobei die Mehrzahl von zweiten Kugeln (34) zwischen dem Befestigungselement (10) und dem Verbindungselement (40) angeordnet ist und eine Fähigkeit aufweist, das Verbindungselement (40) und das drehende Element (20) so zu bewegen, dass sie sich relativ zu dem Befestigungselement (10) um die zweite Achse (A2) drehen.

3. Kameramodul (100) nach Anspruch 2, wobei die Basis (22) eine erste Seitenwand (221) umfasst, die dem Verbindungselement (40) zugewandt ist, wobei ein erster Drehschlitz (221a), der auf die Mehrzahl von ersten Kugeln (32) abgestimmt ist, an der ersten Seitenwand (221) der Basis (22) definiert ist;
wobei das Verbindungselement (40) eine erste Außenwandfläche (42) umfasst, die entsprechend der ersten Seitenwand (221) der Basis (22) zugewandt ist, wobei ein zweiter Drehschlitz (42a) an der ersten Außenwandfläche (42) des Verbindungselements (40) definiert ist, der entsprechend dem ersten Drehschlitz (221a) zugewandt und auf die Mehrzahl von ersten Kugeln (32) abgestimmt ist;
wobei die Mehrzahl von ersten Kugeln (32) in dem ersten Drehschlitz (221a) und dem zweiten Drehschlitz (42a) aufgenommen ist, wobei ein erster Spalt (D1) zwischen der ersten Seitenwand (221) der Basis (22) und der ersten Außenwandfläche (42) des Verbindungselements (40) definiert ist und das drehende Element (20) dazu fähig ist, um die erste Achse (A1) innerhalb eines durch den ersten Spalt (D1) definierten Bereichs durch Drehen der ersten Kugeln (32) in dem ersten Drehschlitz (221a) und dem zweiten Drehschlitz (42a) gedreht zu werden.

4. Kameramodul (100) nach Anspruch 3, wobei das Verbindungselement (40) eine zweite Außenwandfläche (44) gegenüber der ersten Außenwandfläche (42) umfasst, wobei ein dritter Drehschlitz (44a), der auf die Mehrzahl von zweiten Kugeln (34) abgestimmt ist, an der zweiten Außenwandfläche (44) des Verbindungselements (40) definiert ist;
wobei das Befestigungselement (10) eine erste Seitenwand (140) umfasst, die der zweiten Außenwandfläche (44) des Verbindungselements (40) zugewandt ist, wobei ein vierter Drehschlitz (140a), der entsprechend dem dritten Drehschlitz (44a) zugewandt und auf die Mehrzahl von zweiten Kugeln (34) abgestimmt ist, an der ersten Seitenwand (140) des Befestigungselements (10) definiert ist;
wobei die Mehrzahl von zweiten Kugeln (34) in dem dritten Drehschlitz (44a) und dem vierten Drehschlitz (140a) aufgenommen sind, wobei ein zweiter Spalt (D2) zwischen der zweiten Außenwandfläche (44) des Verbindungselements (40) und der ersten Seitenwand (140) des Befestigungselements (10) definiert ist und das drehende Element (20) dazu fähig ist, um die zweite Achse (A2) innerhalb eines durch den zweiten Spalt (D2) definierten Bereichs durch eine Drehung der Mehrzahl von zweiten Kugeln (34) in dem dritten Drehschlitz (44a) und dem vierten Drehschlitz (140a) gedreht zu werden.

5. Kameramodul (100) nach Anspruch 4, ferner umfassend:
einen mit der Basis (22) verbundenen ersten Antriebsmechanismus (52) zum Antreiben der Basis (22), um das drehende Element (20) dazu zu bringen, sich um die erste Achse (A1) zu drehen; und
einen mit der Basis (22) verbundenen zweiten Antriebsmechanismus (54) zum Antreiben der Basis (22), um das drehende Element (20) dazu zu bringen, sich um die zweite Achse (A2) zu drehen.

6. Kameramodul (100) nach Anspruch 5, wobei die Basis (22) ferner eine zweite Seitenwand (222) umfasst, die auf einer Seite der ersten Seitenwand (221) der Basis (22) angeordnet und mit der ersten Seitenwand (221) der Basis (22) verbunden ist, wobei das Befestigungselement (10) ferner eine zweite Seitenwand (142) umfasst, die mit der ersten Seitenwand (140) des Befestigungselements (10) verbunden und der zweiten Seitenwand (222) der Basis (22) zugewandt ist;
wobei der erste Antriebsmechanismus (52) Folgendes umfasst:
einen ersten Magneten (520), der an der zweiten Seitenwand (222) der Basis (22) befestigt ist; und
eine erste Spule (522), die an der zweiten Seitenwand (142) des Befestigungselements (10) angeordnet ist und dem ersten Magneten (520) entspricht;
wobei, wenn die erste Spule (522) erregt wird, der erste Magnet (520) einer Bewegung unterzogen wird, um die Basis (22) anzutreiben, um das Lichtumlenkungselement (24) so anzutreiben, dass es sich um die erste Achse (A1) dreht; wobei ein erster Montageschlitz (222a) an der zweiten Seitenwand (222) der Basis (22) definiert ist, wobei der erste Magnet (520) in dem ersten Montageschlitz (222a) mittels eines Klebstoffs befestigt ist.

7. Kameramodul (100) nach Anspruch 5, wobei die Basis (22) eine dritte Seitenwand (223) umfasst, die mit der ersten Seitenwand (221) der Basis (22) verbunden ist, wobei das Befestigungselement (10) eine dritte Seitenwand (144) umfasst, die mit der ersten Seitenwand (140) des Befestigungselements (10) verbunden ist und entsprechend der dritten Seitenwand (223) der Basis (22) zugewandt ist;
wobei der erste Antriebsmechanismus (52) Folgendes umfasst:
einen zweiten Magneten (524), der an der dritten Seitenwand (223) der Basis (22) befestigt ist; und
eine zweite Spule (526), die an der dritten Seitenwand (144) des Befestigungselements (10) angeordnet ist, die dem zweiten Magneten (524) entspricht;
wobei, wenn die zweite Spule (526) erregt wird, der zweite Magnet (524) einer Bewegung unterzogen wird, um die Basis (22) anzutreiben, um das Lichtumlenkungselement (24) so anzutreiben, dass es sich um die erste Achse (A1) dreht; wobei ein zweiter Montageschlitz (223a) an der dritten Seitenwand (223) der Basis (22) definiert ist, wobei der zweite Magnet (524) in dem zweiten Montageschlitz (223a) mittels eines Klebstoffs befestigt ist.

8. Kameramodul (100) nach Anspruch 5, wobei die Basis (22) eine untere Wand (224) umfasst, die auf einer Seite der ersten Seitenwand (221) der Basis (22) angeordnet und mit der ersten Seitenwand (221) der Basis (22) verbunden ist, wobei das Befestigungselement (10) eine untere Wand (15) umfasst, die auf einer Seite der ersten Seitenwand (140) des Befestigungselements (10) angeordnet ist, die mit der ersten Seitenwand (140) des Befestigungselements (10) verbunden und entsprechend der unteren Wand (224) der Basis (22) zugewandt ist;
wobei der zweite Antriebsmechanismus (54) Folgendes umfasst:
einen dritten Magneten (540), der an der unteren Wand (224) der Basis (22) befestigt ist; und
eine dritte Spule (542), die an der unteren Wand (15) des Befestigungselements (10) angeordnet ist, die dem dritten Magneten (540) entspricht;
wobei, wenn die dritte Spule (542) erregt wird, der dritte Magnet (540) einer Bewegung unterzogen wird, um die Basis (22) anzutreiben, um das Lichtumlenkungselement (24) so anzutreiben, dass es sich um die zweite Achse (A2) dreht; wobei ein dritter Montageschlitz (224a) an der unteren Wand (224) der Basis (22) definiert ist, wobei der dritte Magnet (540) in dem dritten Montageschlitz (224a) mittels eines Klebstoffs befestigt ist.

9. Kameramodul (100) nach Anspruch 4, umfassend:
ein erstes Magnetelement (62), das an der ersten Seitenwand (221) der Basis (22) befestigt ist; und
ein zweites Magnetelement (64), das an der ersten Seitenwand (140) des Befestigungselements (10) befestigt ist;
wobei eine Polarität eines Magnetpols auf einer Seite des ersten Magnetelements (62), die dem zweiten Magnetelement (64) zugewandt ist, entgegengesetzt zu einer Polarität eines Magnetpols auf einer Seite des zweiten Magnetelements (64) ist, die dem ersten Magnetelement (62) zugewandt ist, so dass die Basis (22), das Verbindungselement (40) und das Befestigungselement (10) durch eine Anziehungskraft entgegengesetzter Polaritäten in der Position begrenzt sind.

10. Kameramodul (100) nach Anspruch 9, wobei das erste Magnetelement (62) einen vierten Magneten (620) umfasst, wobei ein vierter Montageschlitz (221b), der auf den vierten Magneten (620) abgestimmt ist, an der ersten Seitenwand (221) der Basis (22) definiert ist, wobei der vierte Magnet (620) in dem vierten Montageschlitz (221b) mittels eines Klebstoffs befestigt ist;
wobei das zweite Magnetelement (64) einen fünften Magneten (640) umfasst, wobei ein fünfter Montageschlitz (140b), der auf den fünften Magneten (640) abgestimmt ist, an der ersten Seitenwand (140) des Befestigungselements (10) definiert ist, wobei der fünfte Magnet (640) in dem fünften Montageschlitz (140b) mittels des Klebstoffs befestigt ist.

11. Kameramodul (100) nach Anspruch 1, wobei die erste Achse (A1) und die zweite Achse (A2) senkrecht zueinander sind; wobei das Kameramodul (100) ferner eine beweglich mit dem Befestigungselement (10) verbundene Linsenanordnung (70) zum Transmittieren eines Lichts umfasst, das durch das Lichtumlenkungselement (24) strömt; wobei eine optische Achse (A3) der Linsenanordnung (70) senkrecht zu der ersten Achse (A1) und der zweiten Achse (A2) ist.

12. Kameramodul (100) nach Anspruch 11, wobei die Linsenanordnung (70) Folgendes umfasst:
ein bewegliches Element (72);
eine Linseneinheit (74), die an dem beweglichen Element (72) befestigt ist, wobei die optische Achse (A3) der Linsenanordnung (70) eine optische Achse der Linseneinheit (74) ist; und
einen mit dem Befestigungselement (10) und dem beweglichen Element (72) verbundenen dritten Antriebsmechanismus (76) zum Antreiben des beweglichen Elements (72) entlang der optischen Achse der Linseneinheit (74).

13. Kameramodul (100) nach Anspruch 1, wobei das Lichtumlenkungselement (24) ein Prisma ist, wobei das Prisma Folgendes umfasst:
eine Lichteinfallsfläche (240);
eine Licht reflektierende Fläche (242), die mit der Lichteinfallsfläche (240) verbunden und geneigt ist; und
eine Licht emittierende Fläche (244), die mit der Lichteinfallsfläche (240) verbunden ist;
wobei das einfallende Licht von der Lichteinfallsfläche (240) eintritt, durch die Licht reflektierende Fläche (242) umgelenkt wird und von der Licht emittierenden Fläche (244) emittiert wird.

14. Elektronische Vorrichtung, **dadurch gekennzeichnet, dass** sie Folgendes umfasst:
ein vorderes Gehäuse (202);
eine Anzeige (404), die in das vordere Gehäuse (202) eingebettet ist;
eine hintere Abdeckung (204), die mit dem vorderen Gehäuse (202) verbunden ist;
ein erstes Kameramodul (100), das das Kameramodul nach einem der Ansprüche 1-13 und in die hintere Abdeckung eingebettet ist; und
ein zweites Kameramodul (300), das in die hintere Abdeckung (204) parallel zu dem ersten Kameramodul (100) eingebettet ist.

## Revendications

1. Module de caméra (100), **caractérisé en ce qu'**il comprend :
un élément de fixation (10) ;
un élément rotatif (20), relié de manière rotative à l'élément de fixation (10), et comprenant :
une base (22) ; et
un élément de redirection de la lumière (24), fixé à la base (22), pour rediriger une lumière incidente ;
une pluralité de premières billes (32), disposées entre la base (22) et l'élément de fixation (10), capables de déplacer l'élément rotatif (20) autour d'un premier axe (A1) par rapport à l'élément de fixation (10) ; et
une pluralité de secondes billes (34), disposées entre la base (22) et l'élément de fixation (10), capables de déplacer l'élément rotatif (20) autour d'un second axe (A2) par rapport à l'élément de fixation (10) ;
la direction du premier axe (A1) étant perpendiculaire à la direction du second axe (A2) ;
les centres de la pluralité de premières billes (32) étant situés sur le premier axe (A1), et les centres de la pluralité de secondes billes (34) étant situés sur le second axe (A2).

2. Module de caméra (100) selon la revendication 1, comprenant en outre : un élément de liaison (40) disposé entre l'élément de fixation (10) et l'élément rotatif (20),
la pluralité de premières billes (32) étant disposées entre l'élément rotatif (20) et l'élément de liaison (40), et ayant la capacité de déplacer l'élément rotatif (20) pour tourner autour du premier axe (A1) par rapport à l'élément de fixation (10) et à l'élément de liaison (40) ;
la pluralité de secondes billes (34) étant disposée entre l'élément de fixation (10) et l'élément de liaison (40), et ayant la capacité de déplacer l'élément de liaison (40) et l'élément rotatif (20) pour tourner autour du second axe (A2) par rapport à l'élément de fixation (10).

3. Module de caméra (100) selon la revendication 2, la base (22) comprenant une première paroi latérale (221) faisant face à l'élément de liaison (40), une première fente de rotation (221a) adaptée à la pluralité de premières billes (32) étant définie sur la première paroi latérale (221) de la base (22) ;
l'élément de liaison (40) comprenant une première surface de paroi extérieure (42) faisant face en correspondance à la première paroi latérale (221) de la base (22), une deuxième fente de rotation (42a) étant définie sur la première surface de paroi extérieure (42) de l'élément de liaison (40) faisant face en correspondance à la première fente de rotation (221a) et adaptée à la pluralité de premières billes (32) ;
la pluralité de premières billes (32) étant logées dans la première fente de rotation (221a) et la deuxième fente de rotation (42a), un premier espace (D1) étant défini entre la première paroi latérale (221) de la base (22) et la première surface de paroi extérieure (42) de l'élément de liaison (40), et l'élément rotatif (20) pouvant être tourné autour du premier axe (A1) dans une plage définie par le premier espace (D1) en faisant tourner la pluralité de premières billes (32) dans la première fente de rotation (221a) et dans la deuxième fente de rotation (42a).

4. Module de caméra (100) selon la revendication 3, l'élément de liaison (40) comprenant une seconde surface de paroi extérieure (44) opposée à la première surface de paroi extérieure (42), une troisième fente de rotation (44a) adaptée à la pluralité de secondes billes (34) étant définie sur la seconde surface de paroi extérieure (44) de l'élément de liaison (40) :
l'élément de fixation (10) comprenant une première paroi latérale (140) faisant face à la seconde surface de paroi extérieure (44) de l'élément de liaison (40), une quatrième fente de rotation (140a) faisant face en correspondance à la troisième fente de rotation (44a) et adapté à la pluralité de secondes billes (34) étant définie sur la première paroi latérale (140) de l'élément de fixation (10) ;
la pluralité de secondes billes (34) étant logées dans la troisième fente de rotation (44a) et la quatrième fente de rotation (140a), un second espace (D2) étant défini entre la seconde surface de paroi extérieure (44) de l'élément de liaison (40) et la première paroi latérale (140) de l'élément de fixation (10), et l'élément rotatif (20) pouvant être tourné autour du second axe (A2) dans une plage définie par le second espace (D2) par une rotation de la pluralité de secondes billes (34) dans la troisième fente de rotation (44a) et la quatrième fente de rotation (140a).

5. Module de caméra (100) selon la revendication 4, comprenant en outre :
un premier mécanisme d'entraînement (52) relié à la base (22), pour entraîner la base (22) afin d'amener l'élément rotatif (20) à tourner autour du premier axe (A1) ; et
un deuxième mécanisme d'entraînement (54) relié à la base (22), pour entraîner la base (22) afin d'amener l'élément rotatif (20) à tourner autour du second axe (A2).

6. Module de caméra (100) selon la revendication 5, la base (22) comprenant en outre une deuxième paroi latérale (222) disposée sur un côté de la première paroi latérale (221) de la base (22) et reliée à la première paroi latérale (221) de la base (22), l'élément de fixation (10) comprenant en outre une deuxième paroi latérale (142) reliée à la première paroi latérale (140) de l'élément de fixation (10) et faisant face à la deuxième paroi latérale (222) de la base (22) ;
le premier mécanisme d'entraînement (52) comprenant :
un premier aimant (520), fixé à la deuxième paroi latérale (222) de la base (22) ; et
une première bobine (522), disposée sur la deuxième paroi latérale (142) de l'élément de fixation (10) et correspondant au premier aimant (520) ;
lorsque la première bobine (522) est alimentée, le premier aimant (520) subit un mouvement pour entraîner la base (22) afin d'entraîner l'élément de redirection de la lumière (24) à tourner autour du premier axe (A1) ; une première fente de montage (222a) étant définie sur la deuxième paroi latérale (222) de la base (22), le premier aimant (520) étant fixé dans la première fente de montage (222a) au moyen d'un adhésif.

7. Module de caméra (100) selon la revendication 5, la base (22) comprenant une troisième paroi latérale (223) reliée à la première paroi latérale (221) de la base (22), l'élément de fixation (10) comprenant une troisième paroi latérale (144) reliée à la première paroi latérale (140) de l'élément de fixation (10) et faisant face en correspondance à la troisième paroi latérale (223) de la base (22) ;
le premier mécanisme d'entraînement (52) comprenant :
un deuxième aimant (524), fixé à la troisième paroi latérale (223) de la base (22) ; et
une deuxième bobine (526), disposée sur la troisième paroi latérale (144) de l'élément de fixation (10) correspondant au deuxième aimant (524) ;
lorsque la deuxième bobine (526) est alimentée, le deuxième aimant (524) subit un mouvement pour entraîner la base (22) afin d'entraîner l'élément de redirection de la lumière (24) à tourner autour du premier axe (A1) ; une deuxième fente de montage (223a) étant définie sur la troisième paroi latérale (223) de la base (22), le deuxième aimant (524) étant fixé dans la deuxième fente de montage (223a) au moyen d'un adhésif.

8. Module de caméra (100) selon la revendication 5, la base (22) comprenant une paroi inférieure (224) disposée sur un côté de la première paroi latérale (221) de la base (22) et reliée à la première paroi latérale (221) de la base (22), l'élément de fixation (10) comprenant une paroi inférieure (15) disposée sur un côté de la première paroi latérale (140) de l'élément de fixation (10), reliée à la première paroi latérale (140) de l'élément de fixation (10) et faisant face en correspondance à la paroi inférieure (224) de la base (22) ;
le deuxième mécanisme d'entraînement (54) comprenant :
un troisième aimant (540), fixé à la paroi inférieure (224) de la base (22) ; et
une troisième bobine (542), disposée sur la paroi inférieure (15) de l'élément de fixation (10) correspondant au troisième aimant (540) ;
lorsque la troisième bobine (542) est alimentée, le troisième aimant (540) subit un mouvement pour entraîner la base (22) afin d'entraîner l'élément de redirection de la lumière (24) à tourner autour du second axe (A2) ; une troisième fente de montage (224a) étant définie sur la paroi inférieure (224) de la base (22), le troisième aimant (540) étant fixé dans la troisième fente de montage (224a) au moyen d'un adhésif.

9. Module de caméra (100) selon la revendication 4, comprenant :
un premier élément magnétique (62), fixé sur la première paroi latérale (221) de la base (22), et
un deuxième élément magnétique (64), fixé sur la première paroi latérale (140) de l'élément de fixation (10) ;
la polarité d'un pôle magnétique sur un côté du premier élément magnétique (62) faisant face au deuxième élément magnétique (64) étant opposée à la polarité d'un pôle magnétique sur un côté du deuxième élément magnétique (64) faisant face au premier élément magnétique (62), de sorte que la base (22), l'élément de liaison (40) et l'élément de fixation (10) sont limités en position par l'attraction de polarités opposées.

10. Module de caméra (100) selon la revendication 9, le premier élément magnétique (62) comprenant un quatrième aimant (620), une quatrième fente de montage (221b) adaptée au quatrième aimant (620) étant définie sur la première paroi latérale (221) de la base (22), le quatrième aimant (620) étant fixé dans la quatrième fente de montage (221b) au moyen d'un adhésif ;
le deuxième élément magnétique (64) comprenant un cinquième aimant (640), une cinquième fente de montage (140b) adaptée au cinquième aimant (640) étant définie sur la première paroi latérale (140) de l'élément de fixation (10), le cinquième aimant (640) étant fixé dans la cinquième fente de montage (140b) au moyen de l'adhésif.

11. Module de caméra (100) selon la revendication 1, le premier axe (A1) et le second axe (A2) étant perpendiculaires l'un à l'autre ; le module de caméra (100) comprenant en outre un ensemble de lentilles (70) relié de manière mobile à l'élément de fixation (10), pour transmettre une lumière passant à travers l'élément de redirection de la lumière (24) ;
un axe optique (A3) de l'ensemble lentille (70) étant perpendiculaire au premier axe (A1) et au second axe (A2).

12. Module de caméra (100) selon la revendication 11, l'ensemble lentille (70) comprenant :
un élément mobile (72) ;
une unité de lentille (74), fixée à l'élément mobile (72), l'axe optique (A3) de l'ensemble de lentille (70) étant un axe optique de l'unité de lentille (74) ; et
un troisième mécanisme d'entraînement (76), relié à l'élément de fixation (10) et à l'élément mobile (72), pour entraîner l'élément mobile (72) le long de l'axe optique de l'unité de lentille (74).

13. Module de caméra (100) selon la revendication 1, l'élément de redirection de la lumière (24) étant un prisme, le prisme comprenant :
une surface d'incidence de la lumière (240) ;
une surface réfléchissant la lumière (242), reliée à la surface d'incidence de la lumière (240) et inclinée ; et
une surface émettrice de lumière (244), reliée à la surface d'incidence de la lumière (240),
la lumière incidente pénétrant par la surface d'incidence de la lumière (240), étant redirigée par la surface de réflexion de la lumière (242) et étant émise par la surface d'émission de la lumière (244).

14. Dispositif électronique **caractérisé en ce qu'**il comprend :
un boîtier avant (202) ;
un écran (404), intégré dans le boîtier avant (202) ;
un couvercle arrière (204), relié au boîtier avant (202),
un premier module de caméra (100), qui est le module de caméra selon l'une quelconque des revendications 1 à 13 et qui est intégré dans le couvercle arrière ; et
un second module de caméra (300), intégré dans le couvercle arrière (204) en parallèle avec le premier module de caméra (100).
